# EUROPEAN PATENT APPLICATION

(11) **EP 4 074 231 A1**
(43) Date of publication of application: **19.10.2022**
(21) Application number: 21804033.5
(22) Date of filing: 10.05.2021
(51) Int. Cl.: A47J 43/10, B01F 3/04, B01F 3/08, B01F 3/12, B01F 11/00, F16F 1/12

(54) **FOAMING TOOL, COMPRISING COIL SPRING WITH CONSTANT WINDING DIAMETER AND VARIABLE PITCH THAT IS CAPABLE OF MOVING FREELY INSIDE CONTAINER, AND USE METHOD THEREFOR**

(30) Priority: 11.05.2020 JP 2020083280; 30.11.2020 JP 2020198483
(71) Applicant: Mitsuemu Co., Ltd., Hiroshima 737-0141 (JP)
(72) Inventor: MASUMOTO, Mikinari, Kure-shi Hiroshima 737-0141 (JP)
(74) Representative: Hasegawa, Kan
(86) International application number: PCT/JP2021/017687
(87) International publication number: WO 2021/230196

(57) **Abstract**

A device for mixing liquid material which a user shakes by hand up and down or left and right is provided. The device includes: a container that includes a space on an inner side extending in the longitudinal direction, and a grip shape on an outer side of the container; an opening-closing member; and a coil spring which has a constant winding diameter and moves freely inside the container in the longitudinal direction. Liquid material and the coil spring are contained in the container, the liquid material being obtained by mixing a material to be dispersed and liquid. A silencer is provided at the end of the coil spring. The device includes: a coil spring abutting part that abuts against and supports 80% of a planar spread formed by one winding of an end of the coil spring relative to the one winding; a first vertical wall and a second vertical wall which are two vertical walls which are perpendicular to the coil spring abutting part and also perpendicular to the coil constituting the coil spring, and are provided at limiting positions where the coil spring of the coil spring abutting part abuts; and a cylindrical wall that extends vertically opposite to the coil spring of the coil spring abutting part, and has an inner diameter set to be the outer diameter of the coil spring, wherein the first vertical wall and the second vertical wall each have two holes through which a coil constituting the coil spring can pass arranged side by side in a direction in which the coil spring extends.

## Description

### Technical Field

The present invention relates to a device for mixing, whipping or frothing materials. In particular, the present invention relates to a device for mixing, whipping or frothing materials by stirring and mixing liquid containing oil and aqueous phases, gas and liquid, or liquid and solid, which includes a coil spring with a constant winding diameter, sparse and dense pitch, and freely movable in a bottle.

### Background Art

Patent Literature 1 proposes a food mixing machine. The food mixing machine provides a device for putting vinegar and cooked rice in a drum and stirring them to make vinegared rice.

Patent Literature 2 proposes that the dough containing the cake flour is kneaded in the presence of ozone.

Patent Literature 3 proposes a packaged liquid seasoning that makes meat to obtain a tender and succulent texture, fiber texture, and taste.

Patent Literature 4 proposes a bottled liquid seasoning containing grated daikon radish which makes a good match with fried foods.

Patent Literature 5 discloses a bottled separated liquid seasoning. The bottled separated liquid seasoning is proposed, in which the oil phase is dispersed in the aqueous phase by shaking lightly, and when eating it over ingredients such as raw vegetables, it is possible to clearly recognize the flavor of the vegetables themselves mixed in the aqueous phase as crushed vegetables, and the crushed vegetables are hard to settle on the bottom of the bottle and have an excellent appearance.

Patent Literature 6 discloses a bottled liquid seasoning. The bottle, which is deformed flexibly so that the content can be easily discharged even if the content is a highly viscous liquid seasoning, and does not easily spoil the original aesthetics of the bottle even if the content is reduced, is proposed.

Patent Literature 7 discloses a bottled liquid seasoning containing sesame seeds separated from edible oils and fats. It contains sesame seeds, edible oils and fats, and a dispersant, and the sesame seeds are easily dispersed by simply holding it in the hand and shaking it lightly.

Patent Literature 8 discloses a stirring device (liquefaction promoting device) in a heat pump system. A spiral spring is provided inside a cylindrical casing closed by two end plates so that it can move vertically.

Patent Literature 9 describes an agitation assembly for agitating salad dressing and the like. It is described that the agitation assembly device includes a spiral tether and an agitator device within an interior of a container, the tether is coupled to the agitator device, the tether expands and contracts during agitation or shaking of the container, a holding ring is included as a means of holding the tether, and the holding ring fits into an annular groove of the container.

### Citation List

### Patent Literature

Patent Literature 1: JP 2017-212889 A
Patent Literature 2: JP 4724175 B2
Patent Literature 3: JP 2014-124123 A
Patent Literature 4: JP 2013-111064 A
Patent Literature 5: JP 2011-109973 A
Patent Literature 6: JP 2017-019562 A
Patent Literature 7: JP 2002-369665 A
Patent Literature 8: JP 2015-212601 A
Patent Literature 9: US 2015/0290605 A

### Summary of Invention

### Technical Problem

It has been common to mix and stir food materials so as to improve the taste and mouthfeel (Patent Literature 1). The more finely and evenly the food materials are stirred, the better become the taste and mouthfeel. Then, in order to increase the degree of mixing and stirring, there is proposed a device for kneading dough containing the cake flour in the presence of ozone (Patent Literature 2) .

There are also proposed liquid seasonings which make meat tender and succulent (Patent Literature 3), which make a good match with fried foods (Patent Literature 4), which contain an aqueous phase and an oil phase and is used after shaking the bottle so that the oil phase is dispersed in the aqueous phase (Patent Literature 5), and which contain sesame seeds and is used after being shaken so as to disperse the sesame seeds (Patent Literature 7).

There is also proposed a bottled liquid seasoning, the bottle being flexibly deformed to ease discharge of the content (Patent Literature 6).

There is also proposed a stirring device in a heat pump system having a structure in which a spiral spring is provided inside a cylindrical casing (Patent Literature 8).

There is also proposed an agitation assembly device for agitating salad dressing (Patent Literature 9).

A material, shape, structure, and the like of the liquid seasoning bottle from which the liquid seasonings can be easily discharged have been proposed (Patent Literature 6). However, there is no bottle that has a structure for dispersing and frothing the separated components.

It is considered that the reason is that a dispersant is used as the liquid seasoning (Patent Literature 8 and the like).

In general households, when making seasonings such as dressings at home, it is considered that dispersants may not be used. Even in that case, the inventor of the present invention thought that it may be possible to provide a bottle having an agitating function of a liquid material by shaking by hand by the user.

In addition, if a liquid seasoning bottle having a structure having such an agitating effect is used as a mass-produced seasoning, it becomes possible to select not to use a dispersant when designing the liquid seasoning, and it increases the degree of freedom in designing liquid seasonings.

Furthermore, such a bottle for liquid seasonings can serve as a cooking device for mixing liquid material for mixing various liquids. For example, when the cake flour is dissolved in water, it can be finely homogenized and mixed to make the texture and taste of powdered foods such as okonomiyaki unique.

In addition to mixing ingredients, it is also possible to mix beverages such as milk, green juice, smoothies, juices, and the like.

It is also possible to froth facial cleansers (facial cleansing liquid, cleansing oils), body soaps, and hair styling products (hair styling liquids, and the like).

It is also possible to froth detergent (kitchen detergent, laundry detergent).

In addition, it is useful to use this device for mixing liquid material to agitate and froth building materials and the like that are used by being dissolved in water. Furthermore, it is also useful for agitating industrial machine oils.

The inventors of the present invention repeated the experiments day and night, thinking that it may be possible to further improve the internal structure of this type of the agitator by making improvements. Then, finally, they have found a device for mixing liquid material having a useful structure, that is, a device for mixing liquid material including a string-wound spring which has a constant winding diameter, sparse and dense pitch, and can move freely in the bottle.

An object of the present invention is to provide a device for mixing liquid material having a function of mixing and frothing liquid material by a user holding it by hand and shaking it laterally (horizontally) at a low cost, and to provide a method of using the device for mixing liquid material.

### Solution to Problem

In the present invention, the liquid material refers to a material in such a state that a liquid (for example, water) and a substance (for example, oil, powder, particles, and the like) dispersed therein are mixed. Here, the mixing does not have to be in a uniformly mixed state, and the liquid and the substance may exist separately or the substance may be precipitated.

The device for mixing liquid material according to the present invention is a device for mixing liquid material that contains a material to be dispersed and a liquid in a mixed state and is shaken to allow the material to be dispersed in the liquid such that the liquid material is whipped or frothed, the device characterized by comprising: a container extending in the longitudinal direction for containing the liquid material and whip or froth of the liquid material; an opening-closing member provided at an upper part of the container for taking in and out the liquid material; and a coil spring contained in the container, the coil spring having a constant winding diameter, the coil spring having a dense pitch at an upper end and a lower end, and a sparse pitch in a central part, the coil spring moving freely inside the container.

Accordingly, it is possible for the user to disperse the material to be dispersed in liquid and further mix it by putting the liquid material in this device for mixing liquid material and shaking it by hand to make the coil spring move including vibration and swing, and immediately after that it can be taken out from the opening-closing member and used. By providing the pitch of the coil springs to be sparse and dense, it is easy to maintain vibration and swing by using the coil spring part as a weight. Then, the part where the pitch of the coil spring is dense mixes the liquid material, and brings about a shearing effect.

Furthermore, the device is characterized in that the container has a wide central part and includes a space for containing the whipped whip or the frothed froth.

This makes it possible to contain more whip or froth as a result of whipping or frothing.

The device is characterized in that a shock absorbing material is provided at the upper part and a lower part in the container.

Accordingly, it is possible to prevent the inside of the container from being damaged and to reduce noise.

The device is characterized in that a lower opening-closing member is further provided at a lower part of the container.

This makes cleaning easier after using this device for mixing liquid material.

The device for mixing liquid material according to the present invention is a device for mixing liquid material that contains a material to be dispersed and a liquid in a mixed state and is shaken to allow the material to be dispersed in the liquid such that the liquid material is whipped or frothed, the device characterized by comprising:
a container that includes a space on an inner side extending in the longitudinal direction for containing the liquid material and whip or froth of the liquid material, and a grip shape that allows a hand to be gripped on an outer side of the container;
an opening-closing member provided at an upper part of the container for taking in and out the liquid material; and
a coil spring contained in the container, the coil spring having a length that is 60 percent to 80 percent of a height on the inner side of the container, the coil spring having a constant winding diameter, the coil spring having a sparse pitch at both ends and a dense pitch in a central part, the coil spring moves freely inside the container in the longitudinal direction, the coil spring being capable of vibrating and swing, wherein
a user is allowed to shake the container both in a state extending in the longitudinal direction and in a state extending in a horizontal direction in the longitudinal direction and in the horizontal direction, respectively.

Accordingly, the user puts the liquid material in this device for mixing liquid material, and by two actions, that is, the action of shaking the device for mixing liquid material so that the longitudinal direction corresponds to the vertical direction and the action of shaking the device for mixing liquid material so that the longitudinal direction corresponds to the horizontal direction, the coil spring is caused to move including vibration and swing, and thereby it is possible for the user to disperse the material to be dispersed in liquid, further mix it, and immediately after that take it out from the opening-closing member and use it. By providing the pitch of the coil springs to be sparse and dense, it is easy to maintain vibration and swing by using the coil spring part as a weight. Then, the part where the pitch of the coil spring is dense mixes the liquid material, and brings about a shearing effect. Since the winding diameter of the coil is constant, in an orientation where the longitudinal direction of the device for mixing liquid material is horizontal, the dense part of the pitch in the center of the coil spring provides the effect of mixing so as to rub the contents along the inner wall of the device for mixing liquid material.

Furthermore, the device is characterized in that the coil spring has a winding diameter of 55% to 85% of an inner diameter of the container.

This makes it possible to efficiently stir and froth the entire contents.

The device is characterized in that a silencer is provided at one end or both ends of the coil spring.

This makes it possible to reduce noise during use.

The device is characterized in that
the silencer includes:
a coil spring abutting part that abuts against and supports 80% of a planar spread formed by one winding of an end of the coil spring relative to the one winding;
a first vertical wall and a second vertical wall which are two vertical walls which are perpendicular to the coil spring abutting part and also perpendicular to the coil constituting the coil spring, and are provided at limiting positions where the coil spring of the coil spring abutting part abuts; and
a cylindrical wall that extends vertically opposite to the coil spring of the coil spring abutting part, and has an inner diameter set to be the outer diameter of the coil spring, and
the first vertical wall and the second vertical wall each have two holes through which a coil constituting the coil spring can pass arranged side by side in a direction in which the coil spring extends.

Accordingly, even if the coil spring vibrates and swings violently, it does not easily come off and noise can be reduced.

The device for mixing liquid material according to the present invention is characterized by further comprising a spring fixture,
the spring fixture including:
a coil spring abutting part that abuts against and supports 80% of a planar spread formed by one winding of an end of the coil spring relative to the one winding;
a first vertical wall and a second vertical wall which are two vertical walls which are perpendicular to the coil spring abutting part and also perpendicular to the coil constituting the coil spring, and are provided at limiting positions where the coil spring of the coil spring abutting part abuts;
a cylindrical wall that extends vertically opposite to the coil spring of the coil spring abutting part, and has an inner diameter set to be the outer diameter of the coil spring; and
a flange which is a disk parallel to the coil spring abutting part of the cylindrical wall on a side opposite to the coil spring abutting part and extends outward, wherein
the first vertical wall and the second vertical wall each have two holes through which a coil constituting the coil spring can pass arranged side by side in a direction in which the coil spring extends,
an outer diameter of the flange is identical to an outer diameter of an opening of the container, and
if necessary, a user is capable of replacing the silencer with the spring fixture to use the coil spring by being fixed to the opening of the container.

This makes it possible not only to use the coil spring as a coil spring that can freely vibrate and swing, but also to use the coil spring in a state where the upper part is fixed to the opening of the container.

The method of using the device according to the present invention is a method of using a device for mixing liquid material that mixes the liquid material by using the device, the method including : containing the liquid material and the coil spring in the container, the liquid material being in a state in which a material to be dispersed and liquid are mixed, and closing the opening-closing member; repeatedly shaking the device for mixing liquid material with the liquid material and the coil spring contained by the containing in the longitudinal direction in which the coil spring can vibrate by the user holding the device for mixing liquid material by a hand so that the space on the inner side extending in the longitudinal direction is in a vertical direction; repeatedly shaking the device for mixing liquid material with the liquid material and the coil spring contained after the shaking in the longitudinal direction in a transverse direction in which the coil spring can vibrate by the user holding the device for mixing liquid material by a hand so that the space on the inner side extending in the longitudinal direction is in a horizontal direction; and opening the opening-closing member to take out a content.

Accordingly, both dynamic mixing using gravity in the vertical direction and finer mixing in which the dense part of the coil spring rubs the inner wall of the container due to the vibration of the coil spring in the horizontal direction to mix the contents can be realized.

The method of using the device for mixing liquid material according to the present invention is a method of using a device for mixing liquid material that mixes the liquid material by using the device for liquid material, the method including: containing the liquid material and the coil spring in the container, the liquid material being mixed at a ratio of 15 ml of dissolving water with respect to 1.5 cm to 2.0 cm in length of facial washing foam squeezed out from a tube in which the facial washing foam is contained and closing the opening-closing member, a volume of the dissolving water being 30 ml or less; repeatedly shaking the device for mixing liquid material with the liquid material and the coil spring contained by the containing 40 to 75 times in the longitudinal direction in which the coil spring can vibrate by the user holding the device for mixing liquid material by a hand so that the space on the inner side extending in the longitudinal direction is in a vertical direction; repeatedly shaking the device for mixing liquid material with the liquid material and the coil spring contained 40 to 75 times after the shaking in the longitudinal direction in a transverse direction in which the coil spring can vibrate by the user holding the device for mixing liquid material by a hand so that the space on the inner side extending in the longitudinal direction is in a horizontal direction; and opening the opening-closing member to take out a content.

Accordingly, the facial washing foam can be gently penetrated into the skin to form a froth that can efficiently remove dirt.

The method of using the device according to the present invention is a method of using a device for mixing liquid material that mixes the liquid material by using the device for liquid material, the method including: containing the liquid material and the coil spring in the container, the liquid material being mixed at a ratio of 15 ml of dissolving water with respect to a gel-like hand soap pushed 2 to 5 times contained in a pump-type bottle and closing the opening-closing member, a volume of the dissolving water being 30 ml or less; repeatedly shaking the device for mixing liquid material with the liquid material and the coil spring contained by the containing 20 to 40 times in the longitudinal direction in which the coil spring can vibrate by the user holding the device for mixing liquid material by a hand so that the space on the inner side extending in the longitudinal direction is in a vertical direction; repeatedly shaking the device for mixing liquid material with the liquid material and the coil spring contained 20 to 40 times after the shaking in the longitudinal direction in a transverse direction in which the coil spring can vibrate by the user holding the device for mixing liquid material by a hand so that the space on the inner side extending in the longitudinal direction is in a horizontal direction; and opening the opening-closing member to take out a content.

Accordingly, the gel-like hand soap contained in the pump-type bottle can be gently permeated into the skin to form a froth that can efficiently remove dirt.

The method of using the device for mixing liquid material according to the present invention is a method of using a device for mixing liquid material that mixes the liquid material by using the device for mixing liquid material, the method including: containing the liquid material and the coil spring in the container, the liquid material being mixed at a ratio of 20 ml of dissolving water with respect to a gel-like body soap pushed 2 to 3 times contained in a pump-type bottle and closing the opening-closing member, a volume of the dissolving water being 30 ml or less; repeatedly shaking the device for mixing liquid material with the liquid material and the coil spring contained by the containing 50 to 100 times in the longitudinal direction in which the coil spring can vibrate by the user holding the device for mixing liquid material by a hand so that the space on the inner side extending in the longitudinal direction is in a vertical direction; repeatedly shaking the device for mixing liquid material with the liquid material and the coil spring contained 50 to 100 times after the shaking in the longitudinal direction in a transverse direction in which the coil spring can vibrate by the user holding the device for mixing liquid material by a hand so that the space on the inner side extending in the longitudinal direction is in a horizontal direction; and opening the opening-closing member to take out a content.

Accordingly, the gel-like body soap contained in the pump-type bottle can be gently permeated into the skin to form a froth that can efficiently remove dirt.

The method of using the device for mixing liquid material according to the present invention is a method of using a device for mixing liquid material that mixes the liquid material by using the device for mixing liquid material, the method including: containing the liquid material and the coil spring in the container, the liquid material being mixed at a ratio of 20 ml of dissolving water with respect to a gel-like shampoo pushed 1 to 2 times contained in a pump-type bottle and closing the opening-closing member, a volume of the dissolving water being 30 ml or less; repeatedly shaking the device for mixing liquid material with the liquid material and the coil spring contained by the containing 40 to 75 times in the longitudinal direction in which the coil spring can vibrate by the user holding the device for mixing liquid material by a hand so that the space on the inner side extending in the longitudinal direction is in a vertical direction; repeatedly shaking the device for mixing liquid material with the liquid material and the coil spring contained 40 to 75 times after the shaking in the longitudinal direction in a transverse direction in which the coil spring can vibrate by the user holding the device for mixing liquid material by a hand so that the space on the inner side extending in the longitudinal direction is in a horizontal direction; and opening the opening-closing member to take out a content.

Accordingly, the gel-like shampoo contained in the pump-type bottle can be gently permeated into the scalp to form a froth that can efficiently remove dirt.

The method of using the device for mixing liquid material according to the present invention is a method of using a device for mixing liquid material that mixes the liquid material by using the device for mixing liquid material, the method including: containing the liquid material and the coil spring in the container, the liquid material being mixed at a ratio of 20 ml of dissolving water with respect to a kitchen detergent pushed 3 to 4 times contained in a pump-type bottle and closing the opening-closing member, a volume of the dissolving water being 20 ml or less; repeatedly shaking the device for mixing liquid material with the liquid material and the coil spring contained by the containing 40 to 75 times in the longitudinal direction in which the coil spring can vibrate by the user holding the device for mixing liquid material by a hand so that the space on the inner side extending in the longitudinal direction is in a vertical direction; repeatedly shaking the device for mixing liquid material with the liquid material and the coil spring contained 40 to 75 times after the shaking in the longitudinal direction in a transverse direction in which the coil spring can vibrate by the user holding the device for mixing liquid material by a hand so that the space on the inner side extending in the longitudinal direction is in a horizontal direction; and opening the opening-closing member to take out a content.

Accordingly, the gel-like kitchen detergent contained in the push-type bottle can be made into a froth that can efficiently remove dirt.

The method of using the device for mixing liquid material according to the present invention is a method of using a device for mixing liquid material that mixes the liquid material by using the device for mixing liquid material, the method including: making a solid face-washing soap into powder by using a household grater; containing the liquid material and the coil spring in the container, the liquid material being obtained by mixing the powdered soap manufactured by the making with 30 ml of dissolving water and closing the opening-closing member; repeatedly shaking the device for mixing liquid material with the liquid material and the coil spring contained by the containing 40 to 100 times in the longitudinal direction in which the coil spring can vibrate by the user holding the device for mixing liquid material by a hand so that the space on the inner side extending in the longitudinal direction is in a vertical direction; repeatedly shaking the device for mixing liquid material with the liquid material and the coil spring contained 40 to 100 times after the shaking in the longitudinal direction in a transverse direction in which the coil spring can vibrate by the user holding the device for mixing liquid material by a hand so that the space on the inner side extending in the longitudinal direction is in a horizontal direction; and opening the opening-closing member to take out a content.

Accordingly, the solid face-wash soap can be gently permeated into the skin to form a froth that can efficiently remove dirt.

In addition, the method is characterized by further comprising: after the opening, rubbing the content taken out in the opening and picked up by the user to change a state of moist creamy froth to fluffy creamy froth.

This makes it possible to make a fluffy creamy froth.

The method of mixing of the device according to the present invention is a method of mixing for dissolving powder material in liquid using the device, the method including: containing the powder material, the liquid, and the coil spring in the container and closing the opening-closing member; repeatedly shaking the device with the powder material, the liquid, and the coil spring contained by the containing in the longitudinal direction in which the coil spring can vibrate by the user holding the device for mixing liquid material by a hand so that the space on the inner side extending in the longitudinal direction is in a vertical direction; repeatedly shaking the device with the powder material, the liquid, and the coil spring contained after the shaking in the longitudinal direction in a transverse direction in which the coil spring can vibrate by the user holding the device by a hand so that the space on the inner side extending in the longitudinal direction is in a horizontal direction; and opening the opening-closing member to take out a content.

This enables fine mixing even for non-whipping or non-frothing material such as protein powder.

### Advantageous Effects of Invention

The device for mixing liquid material according to the present invention has such an effect that by putting the liquid material in this device for mixing liquid material and shaking it by hand to make the coil spring move including vibration and swing, it is possible for the user to disperse the material to be dispersed in liquid, mix it, and immediately after that take it out from the opening-closing member and use it.

The user puts the liquid material in this device for mixing liquid material, and by two actions, that is, the action of shaking the device for mixing liquid material so that the longitudinal direction corresponds to the vertical direction and the action of shaking the device for mixing liquid material so that the longitudinal direction corresponds to the horizontal direction, the coil spring is caused to move including vibration and swing, and thereby it is possible for the user to disperse the material to be dispersed in liquid, further mix it, and immediately after that take it out from the opening-closing member and use it. By providing the pitch of the coil springs to be sparse and dense, it is easy to maintain vibration and swing by using the coil spring part as a weight. Then, the part where the pitch of the coil spring is dense mixes the liquid material, and brings about a shearing effect. Since the winding diameter of the coil is constant, in an orientation where the longitudinal direction of the device for mixing liquid material is horizontal, the dense part of the pitch in the center of the coil spring provides the effect of mixing so as to rub the contents along the inner wall of the device for mixing liquid material.

### Brief Description of Drawings

Fig. 1 is a diagram showing a configuration of a device for mixing liquid material.
Fig. 2 is a diagram showing each component included in the device for mixing liquid material.
Fig. 3 is a diagram illustrating the density of a coil spring.
Fig. 4 is a diagram showing the states after 5 minutes, 15 minutes, and 30 minutes after whipping the facial cleanser.
Fig. 5 is a diagram of the device for mixing liquid material in which a cap that moves up and down by a screw is provided as the upper opening-closing member of Embodiment 2 of the device for mixing liquid material.
Fig. 6 is a diagram showing a whip or froth take-out port provided in the upper opening-closing member of the device for mixing liquid material according to Embodiment 2.
Fig. 7 is a diagram showing how the upper opening-closing member of the device for mixing liquid material according to Embodiment 2 is opened.
Fig. 8 is a diagram of a coil spring 20.
Fig. 9 is a diagram of the device for mixing liquid material according to Embodiment 3 as viewed from the outside.
Fig. 10 is a diagram of the device for mixing liquid material according to Embodiment 3 as viewed from the outside.
Fig. 11 is a diagram of the device for mixing liquid material according to Embodiment 3 as viewed from the outside.
Fig. 12 is a diagram showing a lid part and a receiving part provided in the upper opening-closing member of the device for mixing liquid material according to Embodiment 3.
Fig. 13 is a diagram showing how the upper opening-closing member of the device for mixing liquid material according to Embodiment 3 is opened.
Fig. 14 is a diagram showing each part of the device for mixing liquid material according to Embodiment 3.
Fig. 15 is a diagram illustrating the density of the pitch of a coil spring.
Fig. 16 is a formulation table of undiluted solution and dissolving water.
Fig. 17 is a diagram of a freely operating spring frothing test.
Fig. 18 is a diagram of a freely operating spring frothing test.
Fig. 19 is a diagram of a freely operating spring frothing (moist to fluffy) test.
Fig. 20 is a diagram of a freely operating spring frothing (fluffy demonstration) test.
Fig. 21 is a diagram of a freely operating spring frothing (fluffy demonstration) test.
Fig. 22 is a diagram of a freely operating spring frothing (fluffy demonstration) test.
Fig. 23 is a diagram of a freely operating spring frothing (10-yen coin surface cleaning effect) test.
Fig. 24 is a diagram of soap powder production.
Fig. 25 is a diagram of a test of a conventional product (fluffy rich) as a comparative example.
Fig. 26 is a diagram of a test of a conventional product (fluffy rich) as a comparative example.
Fig. 27 is a perspective view showing a silencer.
Fig. 28 is a diagram showing how a silencer is attached to a freely operating spring.
Fig. 29 is a perspective view showing a silencer with a widened flange (spring fixture).
Fig. 30 is a diagram showing how a spring is fixed to the upper part of a device for mixing liquid material using a spring fixture.

### Description of Embodiments

Hereinafter, embodiments of the present invention will be described with reference to the drawings. Those having the same reference numerals in the figures have the same configuration and function.

### <Embodiment 1>

### <Configuration>

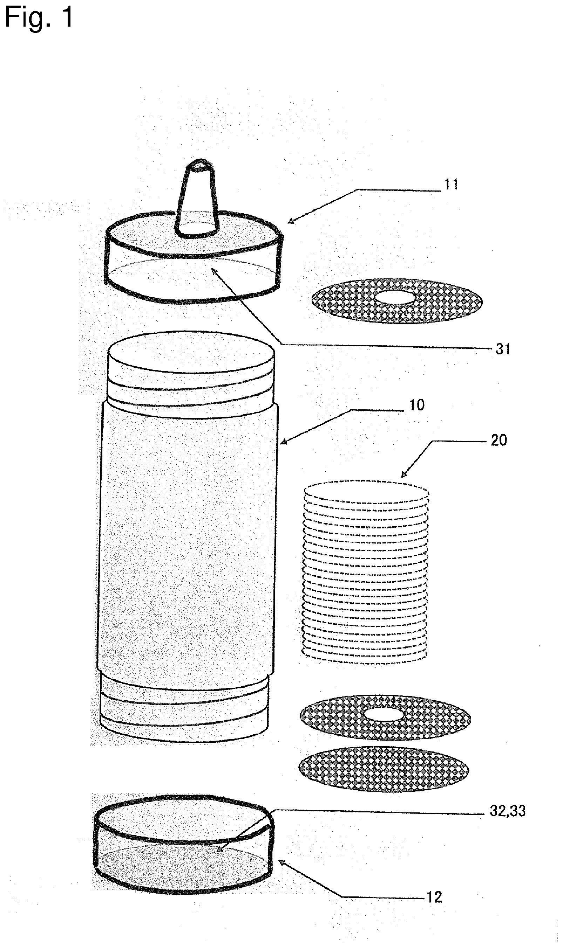

Fig. 1 is a diagram showing a configuration of a device for mixing liquid material according to the present invention. The container 10 is a bottle that can contain a liquid material. Desirably, it is made of a transparent or translucent material such as polyethylene or polypropylene, and the status of separation, precipitation, dispersion, or the like of the contents can be visually confirmed. In addition, desirably, the container 10 has a self-standing shape so that it can be placed upright in a refrigerator, for example.

The size of the container depicted in Fig. 1 can be, for example, 150 mm in height and 60 mm in diameter.

A diameter of about 50 mm to 70 mm, a height of about 150 mm to 170 mm, and a volume of about 280 mm to 400 mm are suitable for a person to hold and shake.

The shape of the container 10 depicted in Fig. 1 is illustrated similar to that of a cylinder, but may be another shape. In order to increase the volume to contain whip or froth, the center part is made slightly wider. In order to prevent the device for mixing liquid material from slipping off your hand when it is shaken, it can be considered that the central part is made in a shape that is easy to grip, for example, a shape that is easy to grip with a finger, and so on.

An upper opening-closing member 11 is provided on the upper part of the container 10, and a liquid material can be taken in and out of the container 10. Here, the upper opening-closing member 11 is configured by a screw type cap. Then, the upper opening-closing member 11 is provided with a tube for taking out whip or froth, a cap is further provided at the tip of the tube, and whip or froth can be taken in and out by opening and closing the cap. It is desirable that the container 10 can be kept airtight so that the contents do not spill in such a state that the upper opening-closing member 11 is fastened to the container 10 and even if it is shaken by hand. As long as the airtightness in the tightened state can be maintained, not only the screw type but also another opening-closing member such as a fitting type can be used.

Fig. 1 depicts an example in which the lower opening-closing member 12 is provided. It is also possible to have a configuration in which the lower opening-closing member 12 is not provided, in which case the container 10 has a shape having a bottom. By providing the lower opening-closing member 12, cleaning of the container 10 after use and before use becomes easy. In addition, there is an advantage that the work of attaching or replacing the shock absorbing material described later can be easily performed.

Both the upper opening-closing member 11 and the lower opening-closing member 12 can be molded from a resin such as polyethylene or polypropylene. It should be noted that the whip or froth take-out port provided in the upper opening-closing member can be made into a desired shape such as a star shape in addition to the round hole.

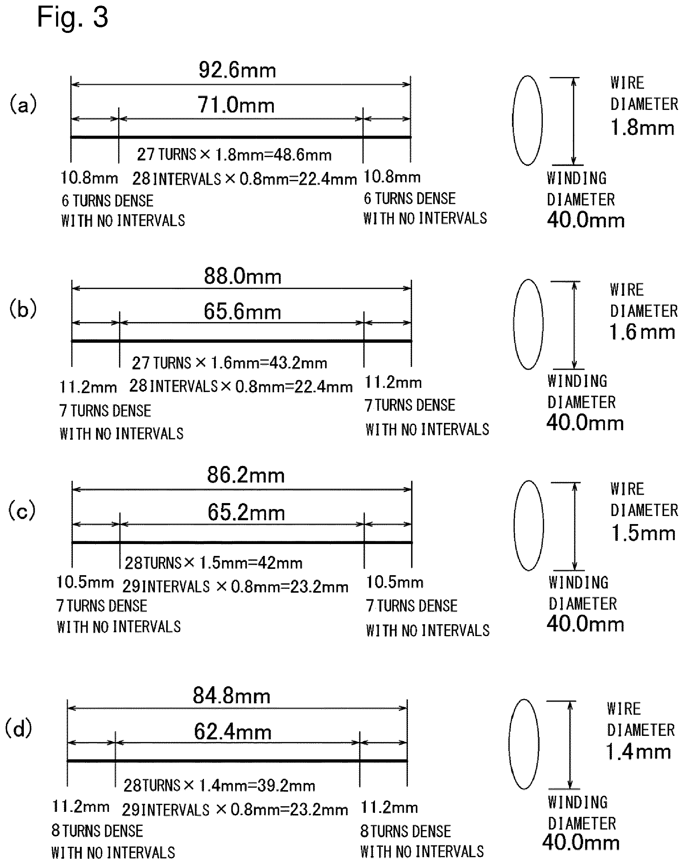

Since the coil spring 20 is placed inside the container 10, it is drawn by a broken line in Fig. 1. The design of the coil spring 20 (density of pitch, wire diameter constituting the coil spring) will be described later with reference to Fig. 3. The coil spring 20 is placed in a state where it is not fixed anywhere so that it can move freely inside the container 10. That is, it is possible to freely move including vibration and swing. As the material of the coil spring 20, for example, iron (steel), stainless steel, titanium, titanium alloy, aluminum, plastic or the like can be used. The surface of the wire constituting the coil spring 20 may have various surfaces to have irregularities. It is desirable that both ends of the wire constituting the coil spring 20 be rounded so as not to damage the inside of the container 10. For example, pickling can be considered.

The coil spring 20 is a coil spring having a constant winding diameter. As shown in Fig. 1, the winding diameter is smaller than the horizontal size inside the container 10, and when the user holds and shakes the device for mixing liquid material, the coil spring 20 is designed so that there is room for space for allowing movement, including vibration and swing. Here, vibration means movement in the direction of expansion and contraction of the coil spring 20, and swing means movement in the direction perpendicular to the direction of expansion and contraction.

The length of the coil spring 20 is desirably 50% to 70% of the height inside the container 10. If it is too short, the stirring efficiency of the entire liquid material will be reduced. If it is too long, the degree of freedom of movement including vibration and swing will be narrowed.

The coil spring 20 swings and vibrates, and exerts a shearing effect on the liquid material. In addition, when the surface of the coil spring 20 has various surfaces and has irregularities, the surface shape of the coil spring 20 also exerts a shearing effect on the liquid material. As a result, the liquid material is made finer and more uniform, and dispersion is promoted.

The shock absorbing materials 31, 32, 33 are provided for the purpose of preventing the inside of the container 10, the inside of the upper opening-closing member 11, and the inside of the lower opening-closing member 12 from being damaged by the violent movement of the coil spring 20, and reducing the noise when hitting. The shock absorbing material 31 provided on the side of the upper opening-closing member 11 has a donut shape. This is because a hole is needed in the center to discharge whip or froth through the tube.

The shock absorbing materials 31, 32, 33 can also serve as packing. That is, when the upper opening-closing member 11 and the lower opening-closing member 12 are tightened, the shock absorbing materials 31, 32, 33 work so that contents containing liquid do not leak to the outside.

One shock absorbing material 31 is provided on the side of the upper opening-closing member 11, and two shock absorbing materials are provided on the side of the lower opening-closing member 12. This is because as the impact when the coil spring 20 is shaken, a force that takes gravity into consideration is applied to the lower opening-closing member 12.

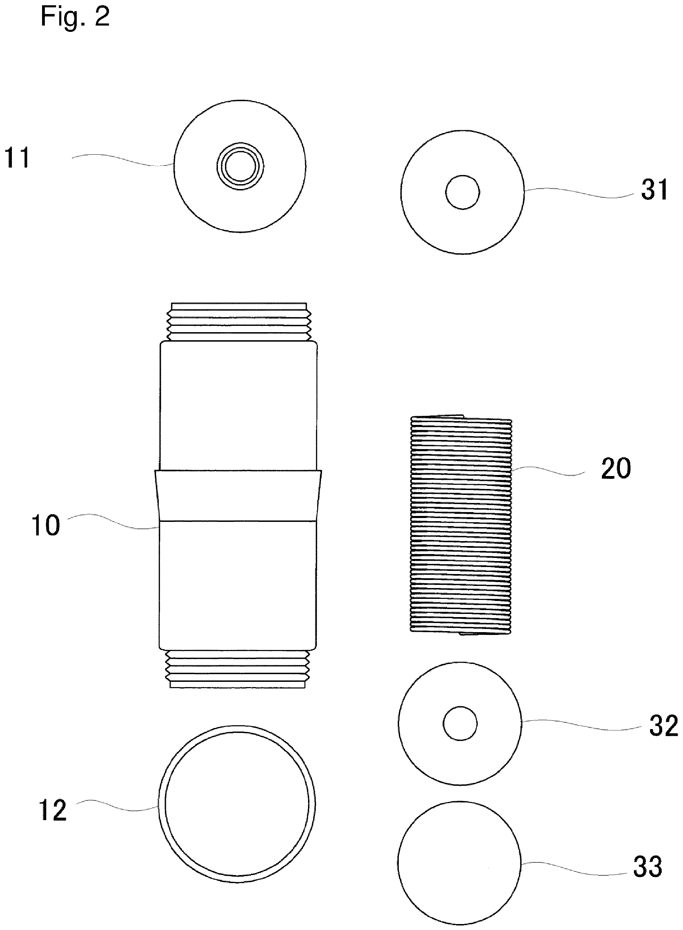

Fig. 2 is a diagram showing parts constituting the device for mixing liquid material of the present invention. The upper part and the lower part of the container 10 are threaded, and the upper opening-closing member 11 and the lower opening-closing member 12 are respectively configured as threaded caps. Then, a shock absorbing material 31 is provided inside the upper opening-closing member 11, and shock absorbing materials 32, 33 are provided inside the lower opening-closing member 12.

As seen in Fig. 2, the coil spring 20 is a coil spring having a constant winding diameter and a sparse and dense pitch. The upper and lower parts of the coil spring have a dense pitch, and the central part has a sparse pitch. This will be described in detail with reference to Fig. 3.

Fig. 3 is a diagram detailing the density of the pitch of the coil spring and the wire diameter constituting the coil spring. Here, stainless steel SUS304 is used as the material.

The coil spring shown in Fig. 3(a) has a wire diameter of 1.8 mm constituting the spring and an outer diameter (winding diameter) of 40 mm. The natural length of the spring (length when placed sideways) is 92.6 mm. The length of the tightly wound part with no intervals at both ends is 10.8 mm. The central part (the part where the pitch is sparse) is 71.0 mm long, and is 27 turns × 1.8 mm + 28 intervals × 0.8 mm = 48.6 mm + 22.4 mm.

The coil spring shown in Fig. 3(b) has a wire diameter of 1.6 mm and an outer diameter (winding diameter) of 40 mm. The natural length of the spring (length when placed sideways) is 88.0 mm. The length of the tightly wound part with no intervals at both ends is 11.2 mm. The central part (the part where the pitch is sparse) is 65.6 mm long, and is 27 turns × 1.6 mm + 28 intervals × 0.8 mm = 43.2 mm + 22.4 mm.

The coil spring shown in Fig. 3(c) has a wire diameter of 1.5 mm and an outer diameter (winding diameter) of 40 mm. The natural length of the spring (length when placed sideways) is 86.2 mm. The length of the tightly wound part with no intervals at both ends is 10.5 mm. The central part (the part where the pitch is sparse) is 65.2 mm long, and is 28 turns × 1.5 mm + 29 intervals × 0.8 mm = 42.0 mm + 23.2 mm.

The coil spring shown in Fig. 3(d) has a wire diameter of 1.4 mm and an outer diameter (winding diameter) of 40 mm. The natural length of the spring (length when placed sideways) is 84.8 mm. The length of the tightly wound part with no intervals at both ends is 11.2 mm. The central part (the part where the pitch is sparse) is 62.4 mm long, and is 28 turns × 1.4 mm + 29 intervals × 0.8 mm = 39.2 mm + 23.2 mm.

The wire diameter of the spring of 1.0 mm to 1.8 mm can be used. For frothing cleaning agents such as hand soaps, facial cleansers and kitchen cleaners, springs with a wire diameter of 1.4 mm to 1.5 mm are suitable.

In the case of using the spring for foods such as grated radish, chopped onions, dressings, and sesame seeds, springs with a wire diameter of 1.6 mm to 1.8 mm are suitable.

The natural length of the spring is preferably 80 mm to 95 mm, which corresponds to 50% to 70% in terms of the ratio to the length of the container 10.

The pitch of the spring is preferably 6 to 8 turns with tight winding at both ends (winding with no intervals), and 0.8 mm to 1.0 mm with an interval between the spring wires at the center.

Since both ends are tightly wound and the central part is sparse, the vibration and swing of the coil spring are likely to be sustained for a long time. When the container is shaken up and down, the spring moves (vibrates) in the longitudinal direction in the container. At this time, the tight winding at both ends of the spring serves as a weight for the movement in the longitudinal direction, and when it hits the inside of each of the upper opening-closing member and the lower opening-closing member, the spring part having a large pitch in the center part of the spring expands and contracts. As a result, the movement of the coil spring is given a momentum, and the operation of shaking the device for mixing liquid material becomes easier for the user.

### <Action / Mechanism>

The action and mechanism of the device for mixing liquid material according to the present invention can be explained from two viewpoints.

The first is to stir a liquid material by the coil spring vibrating and swinging. Accordingly, oil lumps, particle lumps, sediment lumps, and the like are sheared to be made smaller and dispersed in the liquid material.

Secondly, the action / mechanism of harmonic resonance (scaling resonance) of sound can be considered.

When the liquid material is contained in the device for mixing liquid material according to the present invention, the opening-closing member is tightened, and the user holds it in his/her hand and shakes it, an impact is applied to the coil spring. Then, the coil spring vibrates and swings due to the impact. By transmitting the vibration and swing, sound (not limited to the audible range, including the possibility of lower sound or higher sound) is generated. If the user shakes the device for mixing liquid material multiple times, this sound will also continue to be generated in a sustained manner.

On the other hand, oil lumps, particle lumps, precipitate lumps, and the like mixed in the liquid material are considered to exist as molecular clusters. Then, when they collide, sound is also generated.

The sound generated by the vibration and swing of the coil spring and the sound generated when the clusters of molecules mixed in the liquid material collide with each other can have an overtone (harmonic) relationship. The overtones (harmonics) of the sound generated by the vibration and swing of the spring cause harmonic resonance (scaling resonance) due to the collision of the clusters of molecules mixed in the liquid material. Accordingly, mixing and stirring of the liquid material and, by extension, dispersion of oil, particles, precipitates and the like are promoted.

Here, scaling resonance is a phenomenon of resonance in harmonics (overtones) several tens of octaves higher. This is the concept used in "Protein Music" (Chikuma Primer Books written by Yoichi Fukagawa).

Sympathetic vibration and resonance are similar concepts, but in the present specification, they will be considered separately. For example, when one of two strings fixed to the same metal frame (solid) is vibrated, the other also vibrates. In this case, the vibration is transmitted through a solid that is a metal frame, so that it is sympathetic vibration. On the other hand, it is resonance that the sound is transmitted through water, air, and the like (fluid) and vibrates as a result.

In the case of the device for mixing liquid material according to the present invention, vibration is transmitted from the coil spring to molecules such as oil, particles, and precipitates via a fluid (liquid material). Therefore, it should be called resonance. Therefore, it is considered that the harmonic resonance or scaling resonance of the sound is functioning.

Focusing on the macroscopic behavior of the liquid material in the device for mixing liquid material according to the present invention, the liquid material moves by the user's shaking, gives an impact to the coil spring, and vibrates and swings the coil spring. On the other hand, focusing on the microscopic behavior of the liquid material, the clusters of oil, particles, precipitates, and the like contained in the liquid material (a mass of several molecules stuck together) are subjected to force to reduce their sizes by harmonic resonance or scaling resonance. Accordingly, under the shearing effect, oils, particles, precipitates, and the like make the clusters smaller and mix uniformly.

### << Application to building materials, detergents, hair styling products, facial cleansers >>

Liquid material is not limited to foodstuffs. For example, it can also be used as a building material dispersed (dissolved) in water. In addition, it can also be applied to detergents (liquid detergents, powder detergents dissolved in water), hair styling products (liquids for hair styling, and the like), and facial cleansing liquids (cleansing oil, and the like).

Furthermore, it can be applied to industrial machine oils. By using the industrial machine oils in the machine uniformed by using this device for mixing liquid material, the machine can be operated efficiently. Here, the industry includes various industries such as the chemical industry, the construction industry, and the food processing industry. Then, the industrial machine includes both a self-propelled machine such as an industrial vehicle and a fixed machine. Specifically, it includes hydraulic pumps, boilers, prime movers, and the like. Machine oils include hydraulics in hydraulic pumps and lubricating oils in other machines.

In particular, in hydraulic pumps and hydraulic devices used at sites in the construction industry, it becomes necessary to replenish machine oil at the sites. In that case, the device for mixing liquid material according to the present invention is useful for homogenizing and filling the oil required for replenishment.

### << Application to cooking device for mixing liquid material, bottle for liquid material, bottle for seasonings >>

The device for mixing liquid material of the present invention can be applied to a device for mixing liquid material for cooking, a bottle for liquid material, and a bottle for seasonings.

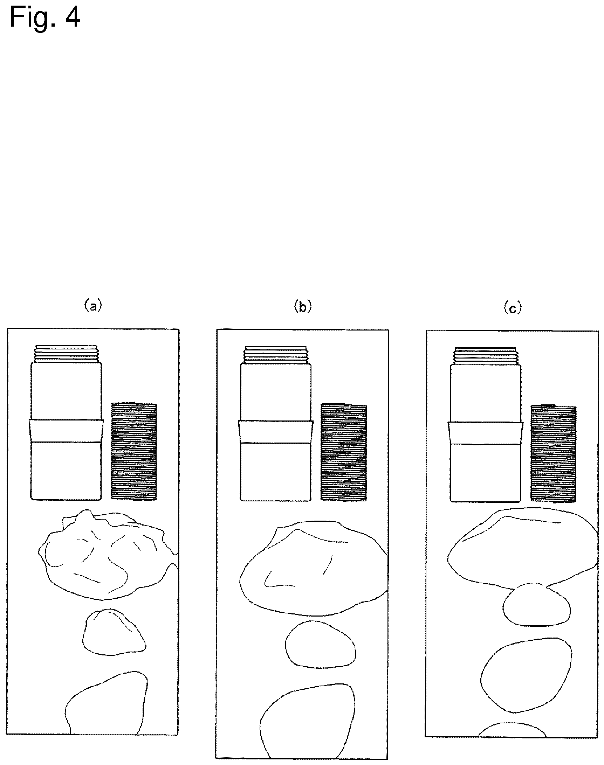

Fig. 4 is a diagram showing the state of froth after 5 minutes, 15 minutes, and 30 minutes after frothing a commercially available facial cleanser. Put 10 ml of tap water in this device for mixing liquid material, take out the facial cleanser about 1 cm in length from the tube, attach it to the coil spring, drop the spring in the container, and close the upper opening-closing member. After that, the user holds the device for mixing liquid material in his/her hand and shakes it up and down 50 times. Then, Fig. 4(a) shows the state after 5 minutes have elapsed since the resulting bubbles were taken out. Figure 4(b) shows the state after 15 minutes have elapsed. Figure 4(c) shows the state after 30 minutes have elapsed. It can be seen that the viscous froth state is maintained even after 30 minutes have elapsed.

### << Use kitchen detergent by frothing >>

It is also possible to store the froth produced by this device for mixing liquid material in another closed bottle and use it later. For example, the froth obtained by frothing the kitchen detergent with this device for mixing liquid material is used by being stored in a closed bottle, which makes it easy to remove oil dirt from pots and dishes.

In the past, kitchen detergent was sometimes used by being frothed with a sponge, but if the sponge containing the detergent is left as it is, mold may occur. The sponge cannot prevent the growth of mold unless it is washed and dried each time it is used. On the other hand, the froth produced by the device for mixing liquid material of the present invention is mold-free and is very useful for the removal of oil at the kitchen.

### << Froth facial cleanser >>

Commercially available facial cleansers sold in tubes are usually used by stretching them from the palm of your hand, applying them to your face, and then flushing them with water. In that case, the amount used at one time is about 2 cm in length from the tube.

On the other hand, when the device for mixing liquid material of the present invention is used, it is possible to sufficiently wash the face by taking out the facial cleanser about 1 cm from the tube, using 10 ml of water, and using froth made by the device for mixing liquid material. That is, it is possible to wash the face using only half the amount of the facial cleanser, which also saves money. In addition, since it is finely sheared with the device for mixing liquid material, it can be expected to have the effect of removing dirt in the back of the skin.

### <Embodiment 2: Device provided with a cap (upper opening-closing member 111) that moves up and down with a screw in the upper opening-closing part>

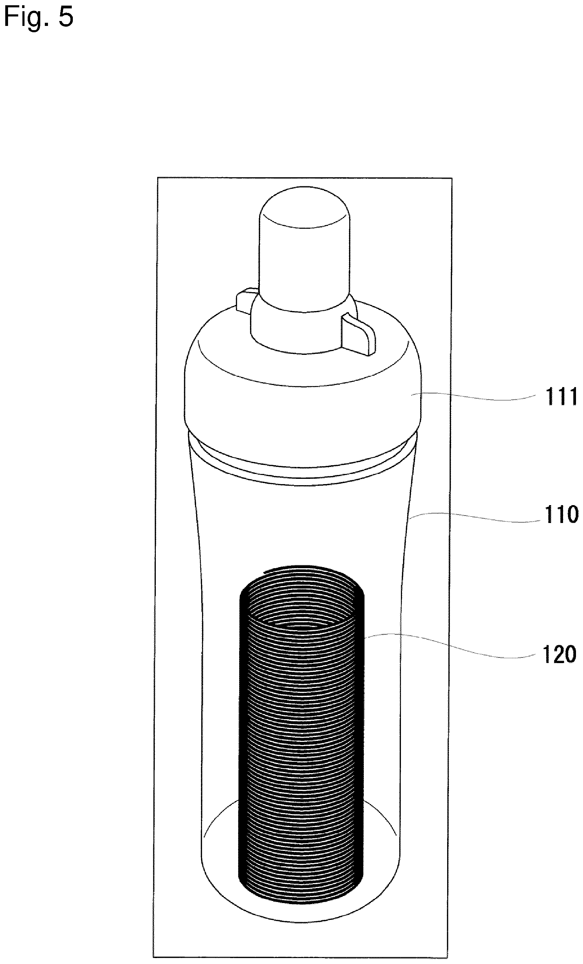

Fig. 5 is a diagram showing a configuration of a device for mixing liquid material according to Embodiment 2 of the present invention. The container 110 is a bottle that can store a liquid material. Desirably, it is made of a transparent or translucent material such as polyethylene or polypropylene, and the status of separation, precipitation, dispersion, or the like of the contents can be visually confirmed. In addition, preferably, the container 110 has a self-standing shape so that it can be placed upright in a refrigerator, for example. In the device depicted in Fig. 5, the bottom is rounded, but desirably, it can be in a comfortable shape, for example, a shape in which the bottom is slightly widened.

The size of the container depicted in Fig. 5 can be, for example, 130 mm to 180 mm in height and 50 mm to 70 mm in diameter.

Desirably, a diameter of about 50 mm to 70 mm, a height of about 150 mm to 170 mm, and a capacity of about 280 mm to 400 mm are suitable for a person to hold and shake.

The shape of the container 110 depicted in Fig. 5 is similar to that of a cylinder, but may be another shape. The central part can also be made slightly wider to increase the capacity to contain the froth. In addition, as will be described later, since the container 110 is not only held so that the longitudinal direction corresponds to the vertical direction, but also held so that the longitudinal direction corresponds to the horizontal direction and the coil spring 120 moves so as to vibrate, It is desirable that the inner wall of the container 110 has a structure and a shape that can obtain the effect such that the coil spring 120 can slide and the liquid material as the content can be sufficiently agitated. In order to prevent the device for mixing liquid material from slipping off your hand when it is shaken, it can be considered that the central part is made in a shape that is easy to grip, for example, a shape that is easy to grip with a finger, and so on.

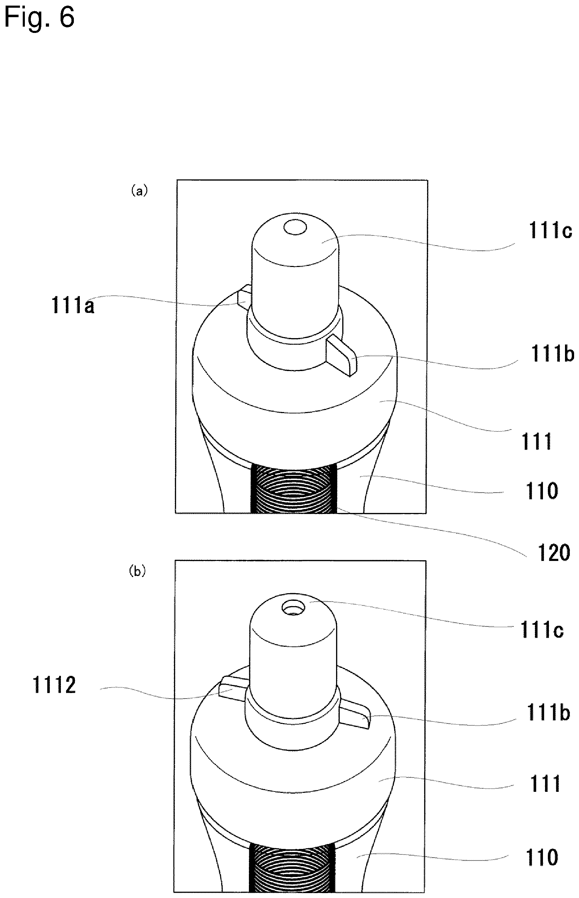

Fig. 6 is a diagram showing a whip or froth take-out port 111c provided in the upper opening-closing member 111 of Embodiment 2 of the device for mixing liquid material. The upper opening-closing member 111 is provided with a whip or froth take-out port 111c for taking out whip or froth so that the whip or froth take-out port 111c may be opened and closed by the user putting a finger on and turning the knobs 111a and 111b shown in Fig. 6(a) and Fig. 6(b). Desirably, the lock is made in each of the open state and the closed state.

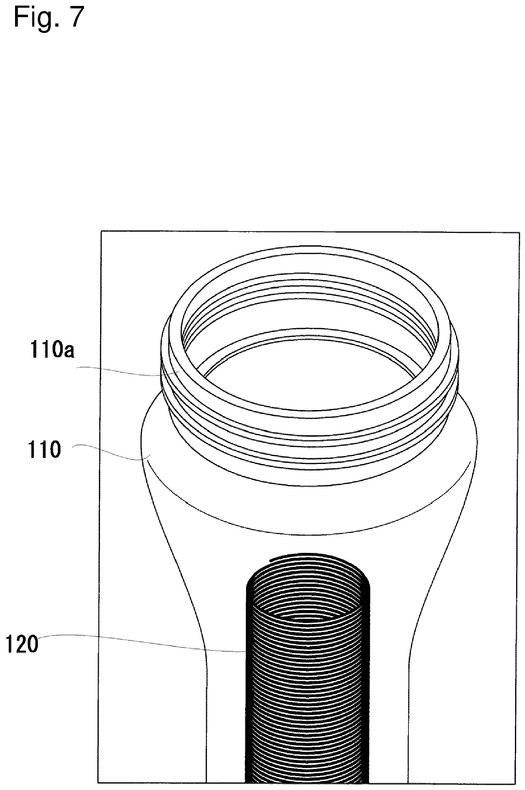

Fig. 7 is a diagram showing a state in which the upper opening-closing member 111 of Embodiment 2 of the device for mixing liquid material is opened. When the upper opening-closing member 111 provided on the upper part of the container 110 is closed, the liquid material can be stored in the container 110 in a sealed state. It is configured that the inside of the upper opening-closing member 111 is threaded, and the opening and closing can be achieved with the screw threaded at the upper part of the container 110. In the state where the upper opening-closing member 111 is fastened to the container 110, it is possible to maintain the airtightness so that the contents do not spill even if the device is shaken by hand. As long as the airtightness in the tightened state can be maintained, not only the screw type but also another opening-closing member such as a fitting type can be used.

As depicted in Fig. 7, the coil spring 120 is placed in the container 110 in a freely movable state. The upper opening-closing member 111 can be molded from a resin such as polyethylene or polypropylene. It should be noted that the whip or froth take-out port provided in the upper opening-closing member can be made into a desired shape such as a star shape in addition to the round hole.

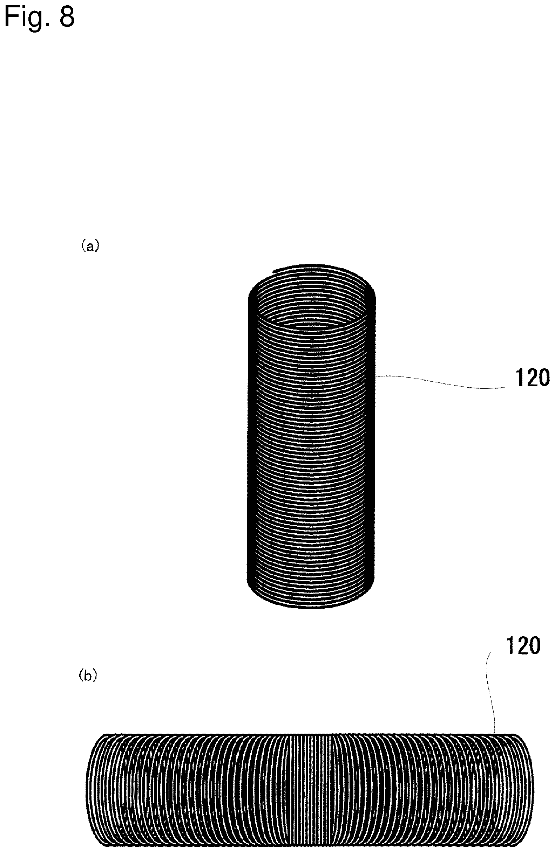

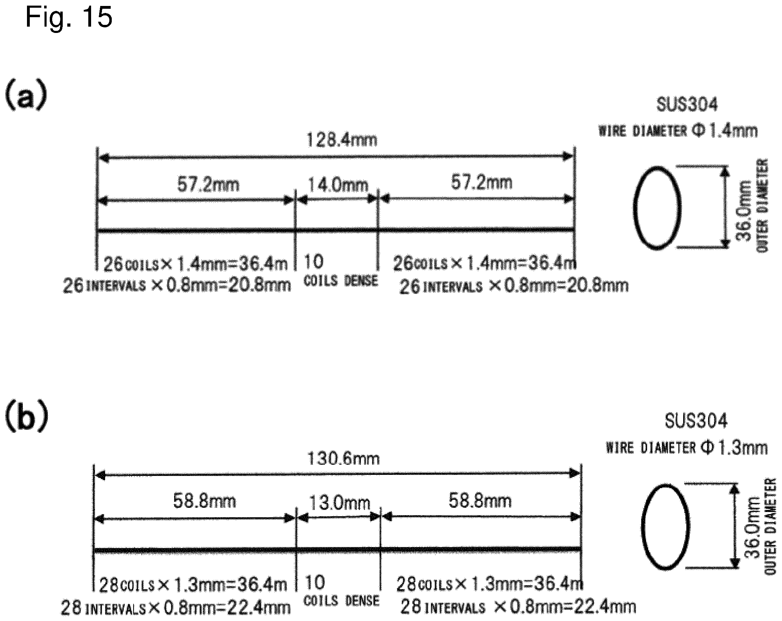

Fig. 8 is a diagram depicting the coil spring 120. The coil spring 120 is placed inside the container 110. The coil spring 120 has a dense pitch part in the central part, and the pitch is sparse at both ends (parts other than the central part). The design (density of the pitch, wire diameter included in the coil spring) will be described later with reference to Fig. 15. The coil spring 120 is placed in an unfixed state so that it can move freely inside the container 110. That is, it is possible to freely move including vibration and swing. As the material of the coil spring 120, for example, iron (steel), stainless steel, titanium, titanium alloy, aluminum, plastic or the like can be used. The wire constituting the coil spring 120 may have various surfaces on its surface to have irregularities. It is desirable that both ends of the wire constituting the coil spring 120 be rounded so as not to damage the inside of the container 110. For example, pickling can be considered.

The coil spring 120 is a coil spring having a constant winding diameter. As shown in Fig. 5 and Fig. 7, the winding diameter is smaller than the horizontal size inside the container 110 so that the coil spring 120 has room for enabling movement including vibration and swing when the user holds and shakes the device for mixing liquid material. Here, vibration refers to movement in the direction of expansion and contraction of the coil spring 120, and swing refers to movement in the direction perpendicular to the direction of expansion and contraction.

The length of the coil spring 120 is preferably 60 to 80 percent of the height inside the container 110. If it is too short, the stirring efficiency of the entire liquid material will be reduced. If it is too long, the degree of freedom of movement including vibration and swing will be narrowed.

The coil spring 120 swings and vibrates, and exerts a shearing effect on the liquid material. In addition, when the surface of the coil spring 120 has various surfaces and has irregularities, the surface shape of the coil spring 120 also exerts a shearing effect on the liquid material. As a result, the liquid material is made finer and more uniform, and dispersion is promoted.

### << Embodiment 3: Device provided with a cap fitted in the receiving part >>

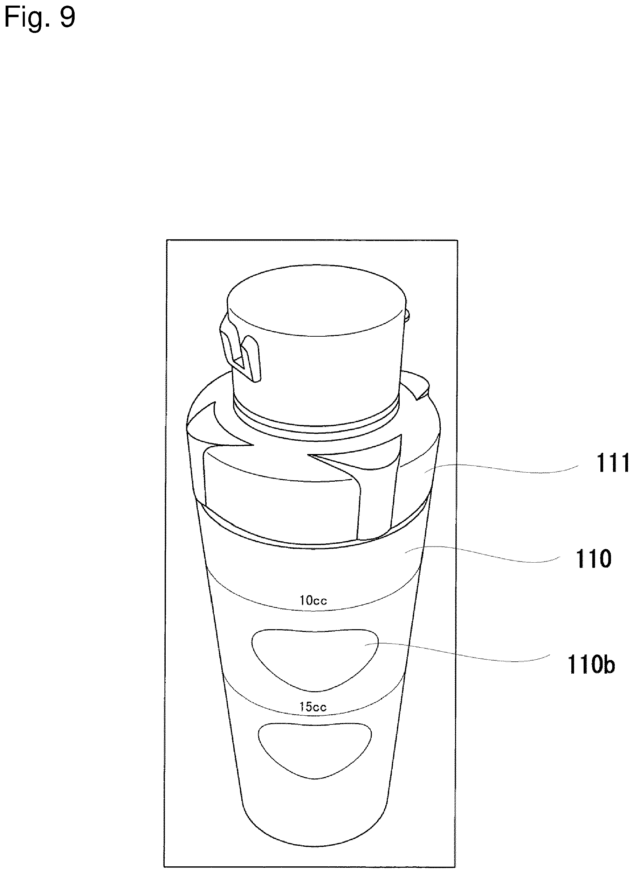

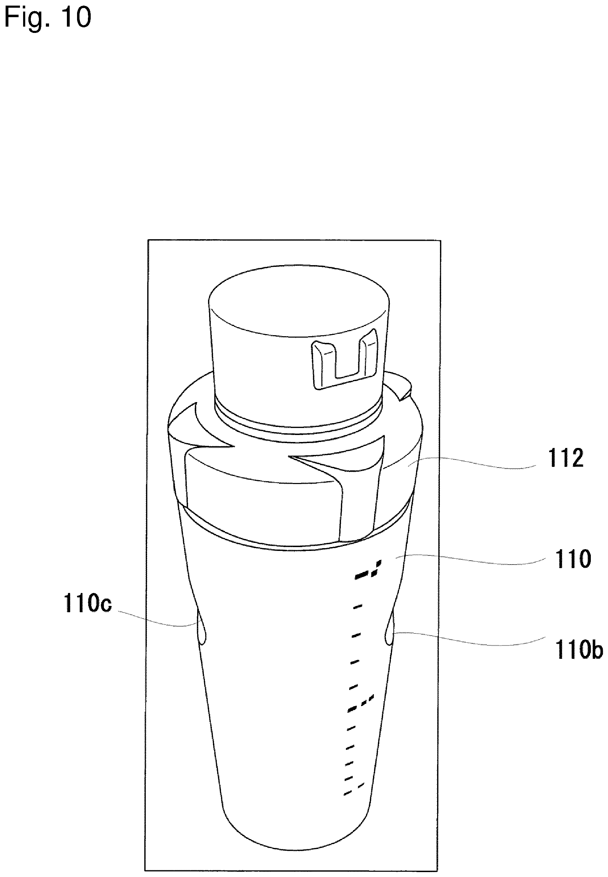

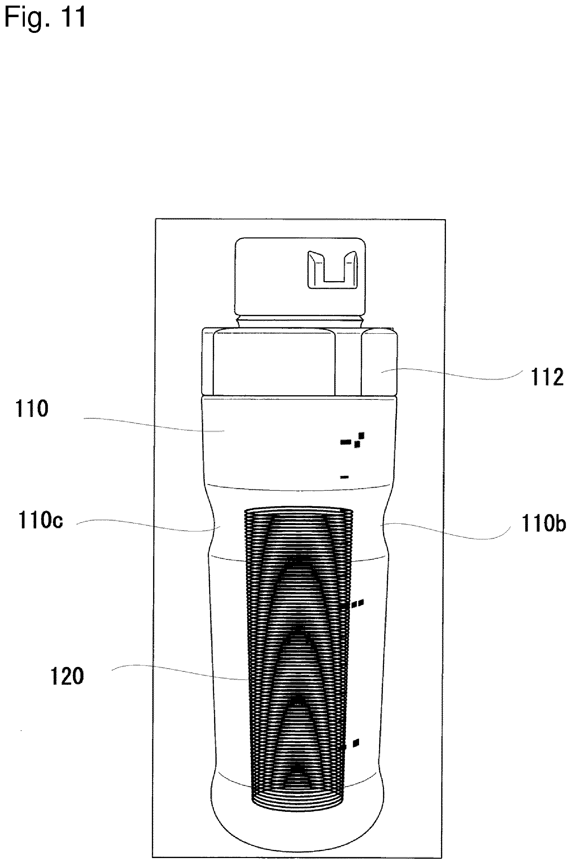

Fig. 9, Fig. 10, and Fig. 11 are views of the device for mixing liquid material according to Embodiment 3 as viewed from the outside. The container 110 is provided with grip parts 110b and 110c. It has a shape that is easy for the user to grasp and a shape that can be followed by a finger.

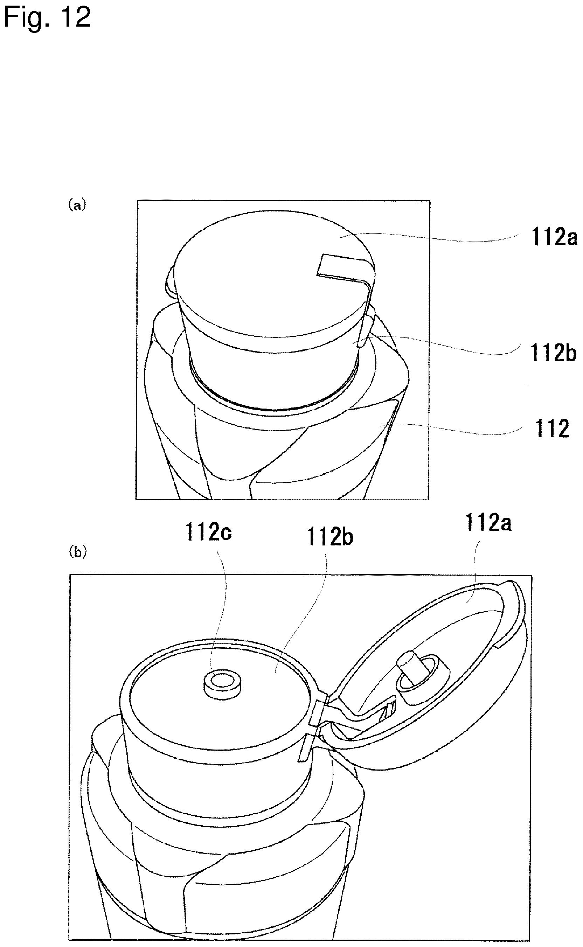

Fig. 12 shows a lid part 112a and a receiving part 112b provided in the upper opening-closing member of the device for mixing liquid material according to Embodiment 3. In Fig. 12(a), the lid part 112a is fitted in the receiving part 112b and is sealed so that the contents do not come out. Fig. 12(b) shows a state in which the lid part 112a is open and the contents can be taken out from the whip or froth take-out port 112c. As depicted in Fig. 12(b), a protrusion is provided on the back side of the lid part 112a to close the hole of the whip or froth take-out port 112c, and when the lid part 112a is closed, the protrusion closes the whip or froth take-out port 112c.

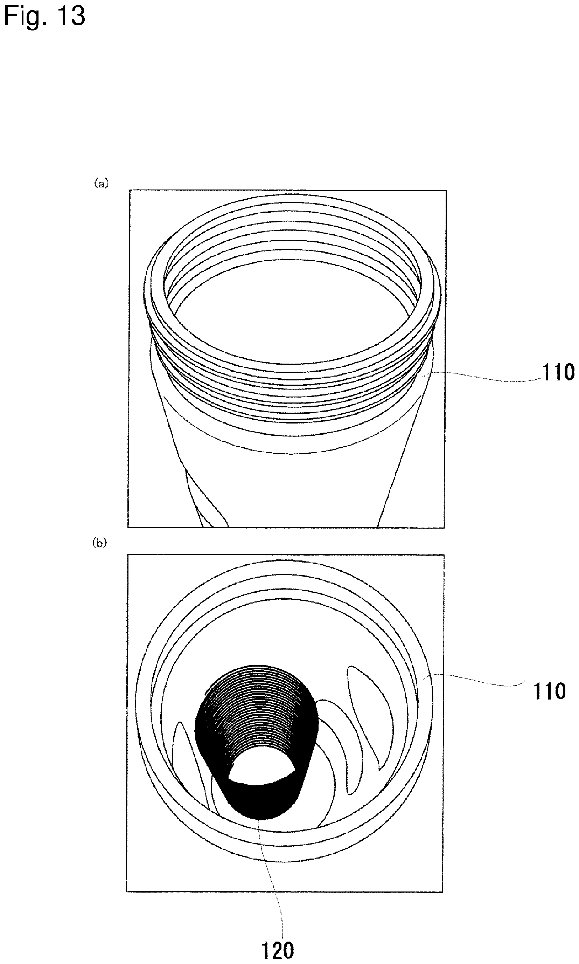

Fig. 13 shows a state in which the upper opening-closing member 112 is removed from the container 110. The sealed state is maintained by the screws threaded on the inside of the upper opening-closing member 112 and the outside of the container 110. Fig. 13(b) shows a state in which the coil spring 120 is contained.

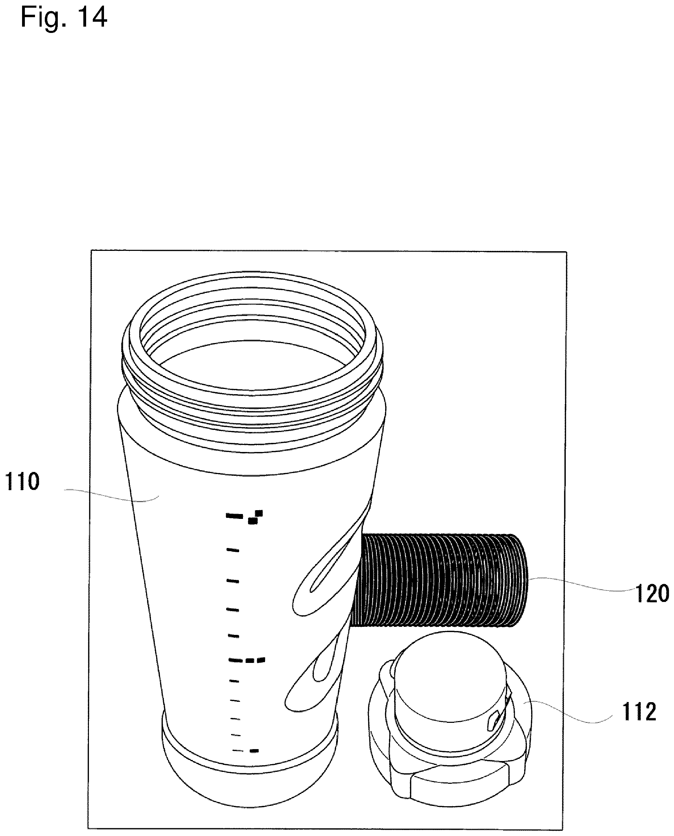

Fig. 14 is a diagram showing parts constituting Embodiment 3 of the device for mixing liquid material. The upper part of the container 110 is threaded, and the upper opening-closing member 112 is configured as a threaded cap.

Fig. 15 is a diagram illustrating the density of the pitch of the coil spring and the wire diameter constituting the coil spring. As the material, stainless steel SUS304 is used. As for the wire diameter, 1.2 mm, 1.3 mm, 1.4 mm, 1.5 mm, and 1.6 mm were tried, and it was found that they were effective. Here, detailed figures especially for coil springs having the wire diameters of 1.4 mm and 1.3 mm will be put.

The coil spring shown in Fig. 15(a) has a wire diameter of 1.4 mm and an outer diameter (winding diameter) of 36 mm. The natural length of the spring (length when placed sideways) is 128.4 mm. The intervals at both ends are each 0.8 mm and the length of the tightly wound part is 14 mm. The parts at both ends (the parts with sparse pitch) are each 57.2 mm long, and are 26 turns × 1.4 mm + 26 intervals × 0.8 mm = 36.4 mm + 20.8 mm.

The coil spring shown in Fig. 15(b) has a wire diameter of 1.3 mm and an outer diameter (winding diameter) of 36 mm. The natural length of the spring (length when placed sideways) is 130.6 mm. The intervals at both ends are each 0.8 mm and the length of the tightly wound part is 13 mm. The parts at both ends (the parts with sparse pitch) are each 58.8 mm long, and are 28 turns × 1.3 mm + 28 intervals × 0.8 mm = 36.4 mm + 22.4 mm.

Regarding the coil length (natural length), it was found that 60% to 80% of the height inside the container 10 is desirable. A suitable coil spring winding diameter is 55 percent to 85 percent of the inner diameter of the container.

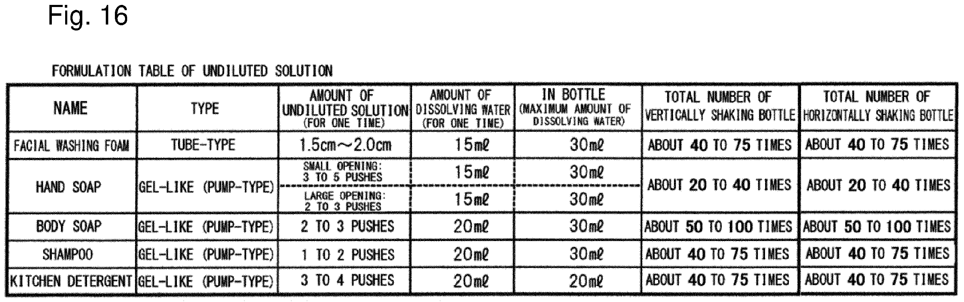

Fig. 16 is a formulation table of the undiluted solution and the dissolving water. It is a table of the contents of the text described in the means for solving problem.

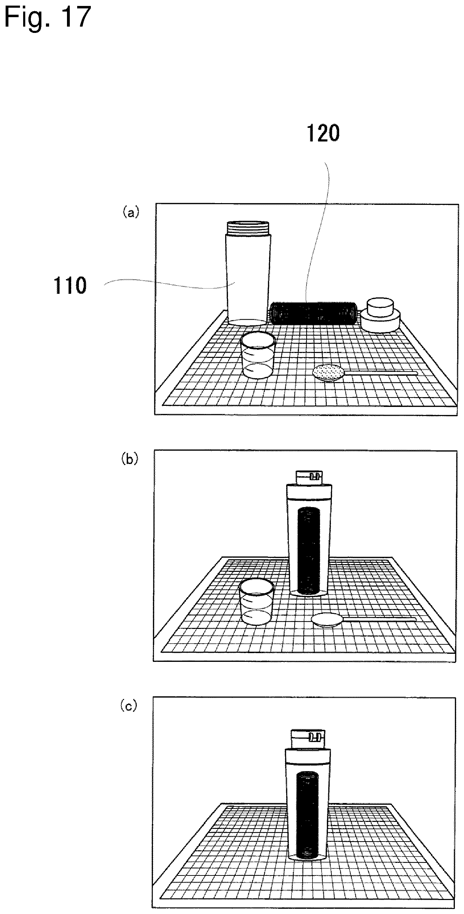

Fig. 17 is a diagram of a freely operating spring frothing test. Fig. 17(a) shows a state in which a teaspoon of soap powder, 20 ml of dissolving water, and the device for mixing liquid material according to the present invention (having a coil spring 120 having a center with a dense pitch and both ends with a sparse pitch) are prepared. Fig. 17(b) shows a state in which the coil spring 120, a teaspoon of soap powder, and 20 ml of dissolving water are put into the container 110 of the device for mixing liquid material, and the opening-closing member 12 is closed. Fig. 17(c) shows a state of stirring 100 times.

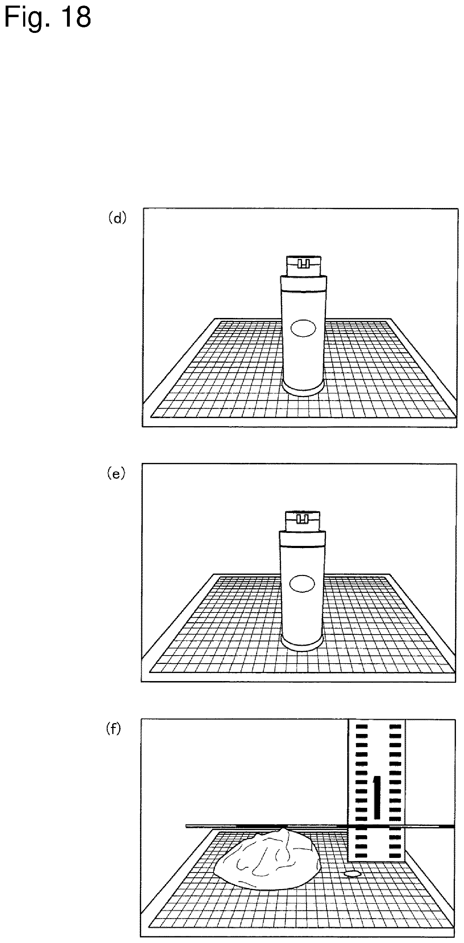

Fig. 18 is a diagram of a freely operating spring frothing test. Fig. 18(d) shows a state of stirring 200 times. Fig. 18(e) shows a state of stirring 300 times. Fig. 18(f) shows how the content was taken out after stirring 300 times and its dimension was measured. The horizontal length of the bottom is 11.0 cm, the vertical length of the bottom is 11.0 cm, and the height of the froth is 4.0 cm.

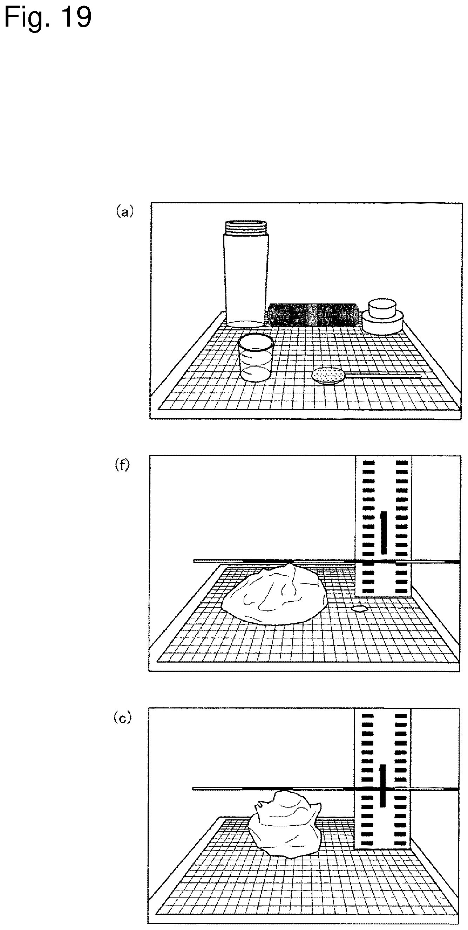

Fig. 19 is a diagram of a freely operating spring frothing (moist to fluffy) test. Fig. 19(a) shows a state in which a teaspoon of soap powder, 20 ml of dissolving water, and the device for mixing liquid material according to the present invention (having a coil spring 20 having a center with a dense pitch and both ends with a sparse pitch) are prepared. Fig. 19(b) shows how the content (moist creamy froth) after stirring 300 times was taken out and its dimension was measured. The horizontal length of the bottom is 11.0 cm, the vertical length of the bottom is 11.0 cm, and the height of the froth is 4.0 cm. Fig. 19 (c) shows the froth (fluffy creamy froth) after taking out the froth produced by stirring 300 times using the device for mixing liquid material and rubbing the hands in the open air for 60 seconds. The horizontal length of the bottom is 8.0 cm, the vertical length of the bottom is 8.0 cm, and the height of the froth is 6.5 cm.

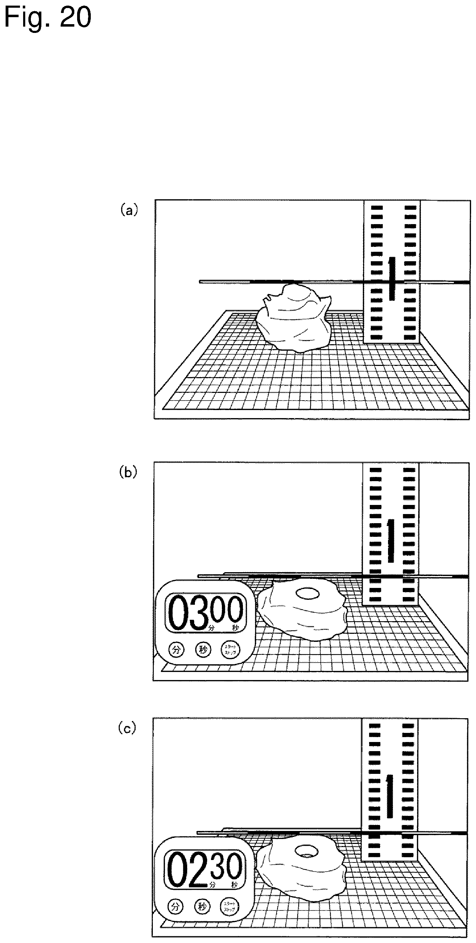

Fig. 20 is a diagram of a freely operating spring frothing (fluffy demonstration) test. Fig. 20(a) shows the froth (fluffy creamy froth) obtained by rubbing the hands in the open air for 60 seconds with the froth after adding 1 teaspoon of soap powder into 20 ml of dissolving water and stirring 300 times. The horizontal length of the bottom is 8.0 cm, the vertical length of the bottom is 8.0 cm, and the height of the froth is 6.5 cm. Fig. 20(b) shows a state in which the fluffy creamy froth is leveled, that is, a 10-yen coin is placed on the froth and the sinking measurement has started for 3 minutes, assuming that the horizontal length of the bottom is 10.0 cm, the vertical length of the bottom is 10.0 cm, and the height of the froth is 3.0 cm. Fig. 20(c) shows the state after 30 seconds have elapsed. The 10-yen coin has sunk 1.0 centimeters.

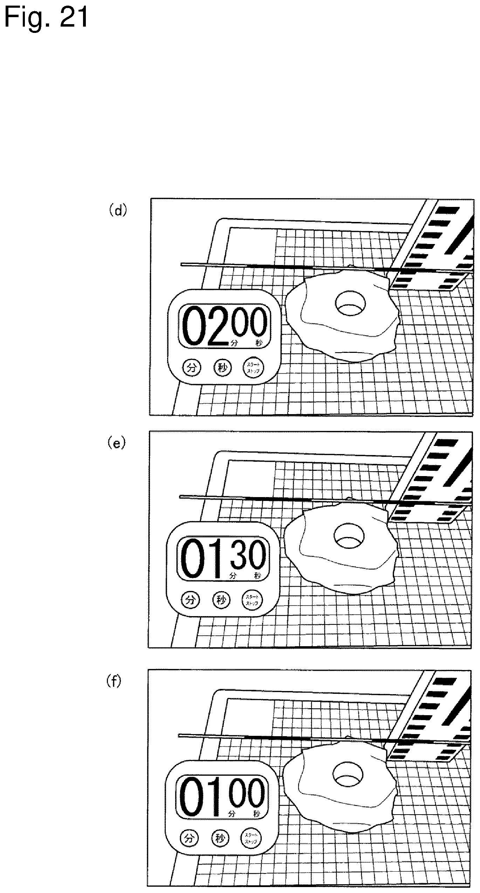

Fig. 21 is a diagram of a freely operating spring frothing (fluffy demonstration) test. Fig. 21(d) shows the state after 1 minute 00 seconds have elapsed. The 10-yen coin has sunk 2.0 centimeters. Fig. 21(e) shows the state after 1 minute and 30 seconds have elapsed. The 10-yen coin has sunk 2.3 centimeters. Fig. 21(f) shows the state after 2 minutes and 00 seconds have elapsed. The 10-yen coin has sunk 2.6 centimeters.

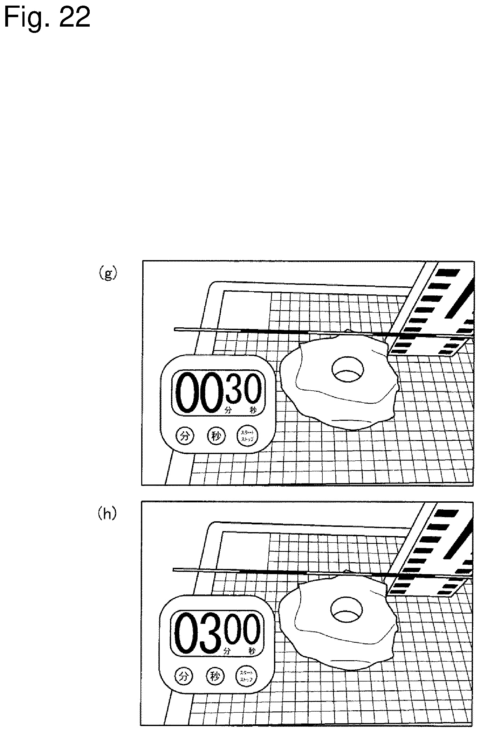

Fig. 22 is a diagram of a freely operating spring frothing (fluffy demonstration) test. Fig. 22(g) shows the state after 2 minutes and 30 seconds have elapsed. The 10-yen coin has sunk 2.6 centimeters. Fig. 22(h) shows the state after 3 minutes and 00 seconds have elapsed. The 10-yen coin has sunk 2.6 centimeters. It can be seen that the height of the froth is 3.0 centimeters, while the sinking of the 10-yen coin stops at 2.6 centimeters. From this, it is recognized that the fluffy creamy froth has the stickiness and viscosity.

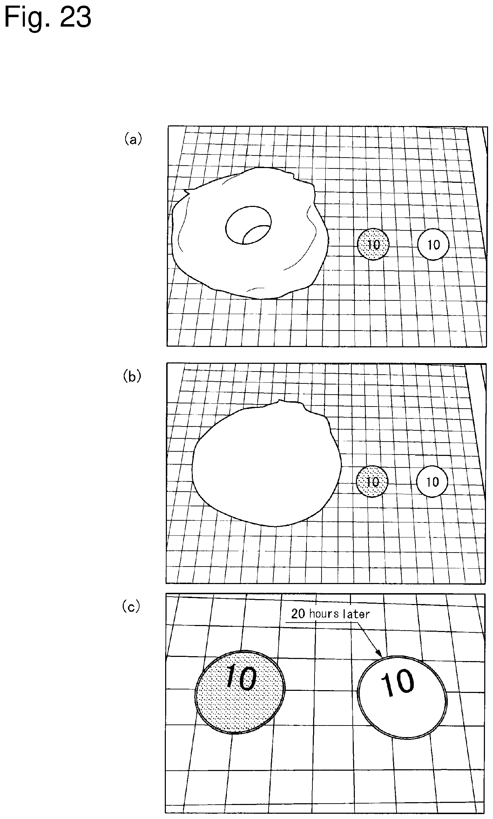

Fig. 23 is a diagram of a freely operating spring frothing (10-yen coin surface cleaning effect) test. After measuring the sinking of the 10-yen coin as described above, when it was left for 20 hours, the surface of the 10-yen coin after 20 hours was washed, and the surface is shining and glossy. In this experiment, a three-minute sinking measurement experiment was merely performed without rubbing. For comparison, a photo was taken with a 10-yen coin (copper coin) that had the same degree of dirt. Fig. 23(a) is a photograph with a 10-yen coin taken out from froth immediately after the sinking measurement experiment and a 10-yen coin to be compared arranged side by side. The right is the 10-yen coin used for the sinking measurement, and the left is the 10-yen coin to be compared. Fig. 23(b) shows a state in which the trace of the sinking of the froth disappears after another 30 minutes have elapsed. Fig. 23(c) is an enlarged photograph.

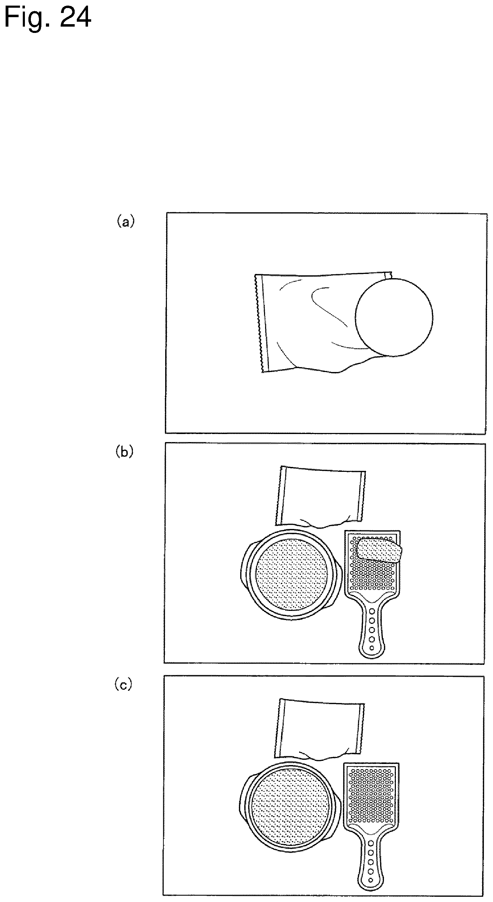

Fig. 24 is a diagram showing a method of producing the powdered soap used in the experiments shown in Fig. 17 to Fig. 23. Fig. 24(a) shows a solid soap for face washing that is a raw material. Fig. 24(b) shows how to grind solid soap with a household grater. Fig. 24(c) shows the resulting powdered soap.

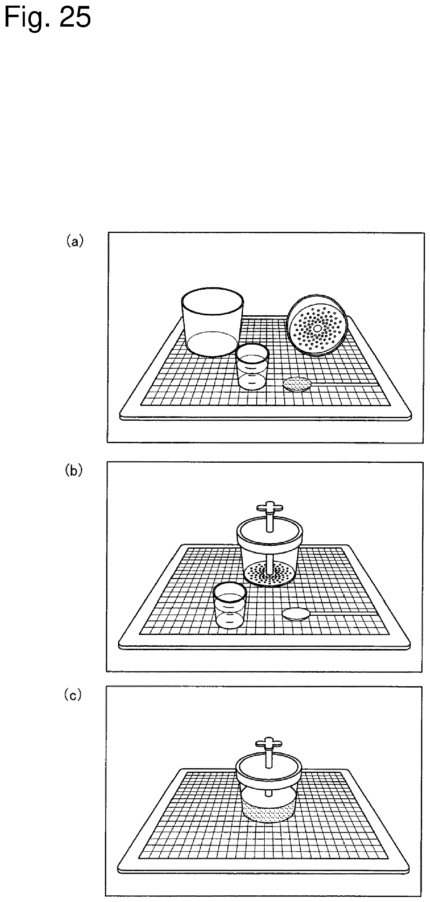

Fig. 25 is a diagram of a test of a conventional product (fluffy rich) as a comparative example. This device for mixing liquid material is a device for mixing liquid material that can be purchased for 100 yen. A disk-shaped stirring plate with a large number of holes can be moved up and down and rotated in the horizontal direction by operating from above. Fig. 25(a) shows a state in which a teaspoon of soap powder, 20 ml of dissolving water, and a conventional device for mixing liquid material are prepared. Fig. 25(b) shows a state in which a teaspoon of soap powder and 20 ml of dissolving water are placed in a conventional device for mixing liquid material, and a disk-shaped stirring plate and an upper lid are set. Fig. 25(c) shows a state in which the soap power is frothed by stirring 100 times.

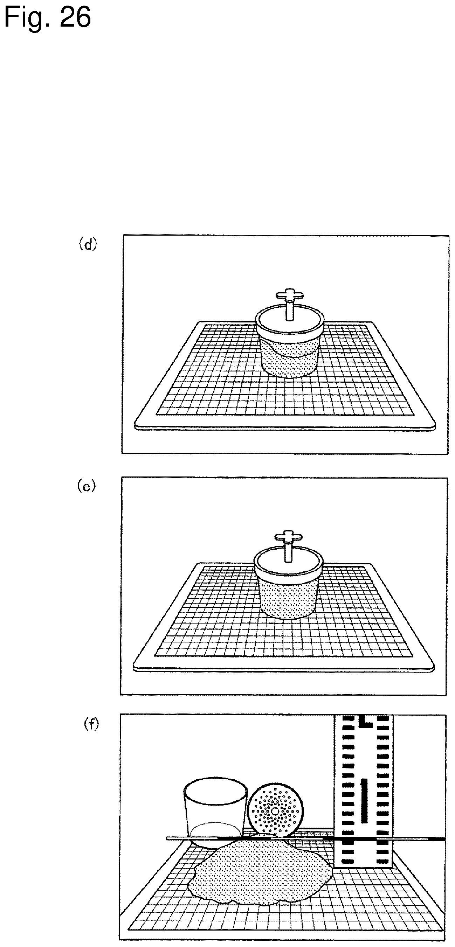

Fig. 26 is a diagram of a test of a conventional product (fluffy rich) as a comparative example. Fig. 26(d) shows a state in which the soap power is frothed by stirring 200 times. Fig. 26(e) shows a state in which the soap power is frothed by stirring 300 times. Fig. 26(f) shows how the content was taken out after stirring 300 times and its dimension was measured. The horizontal length of the bottom is 13.0 cm, the vertical length of the bottom is 13.0 cm, and the height of the froth is 3.0 cm. It can be seen that the froth has a weak viscosity (stickiness) as compared with the froth produced by using the device for mixing liquid material according to the present invention.

Therefore, it can be said that the viscosity (stickiness) of the froth produced by the device for mixing liquid material according to the present invention is strong.

### << Example of providing a silencer >>

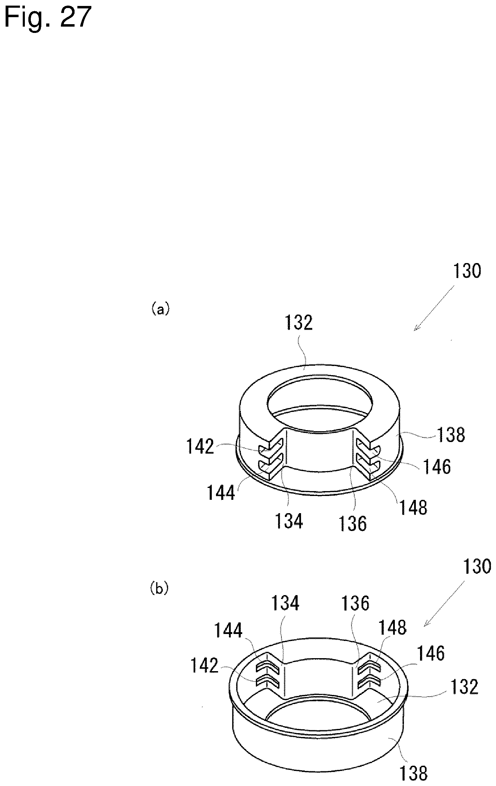

Fig. 27 is a perspective view showing the silencer 130. The silencer 130 can be made of soft plastic and can be made by preparing the required mold and molding.

As shown in Fig. 27, the silencer 130 includes a coil spring abutting part 132 that abuts against and supports 80% of the planar spread formed by one winding of the end of the coil spring relative to the one winding; a first vertical wall 134 and a second vertical wall 136 which are two vertical walls which are perpendicular to the coil spring abutting part 132 and also perpendicular to the coil constituting the coil spring, and are provided at limiting positions where the coil spring of the coil spring abutting part 132 abuts; and a cylindrical wall 138 that extends vertically opposite to the coil spring of the coil spring abutting part 132, and has an inner diameter set to be the outer diameter of the coil spring.

In the first vertical wall 134 and the second vertical wall 136, two holes 142, 144, 146, 148 through which the coils constituting the coil spring can pass are provided to be arranged side by side in the extending direction of the coil spring.

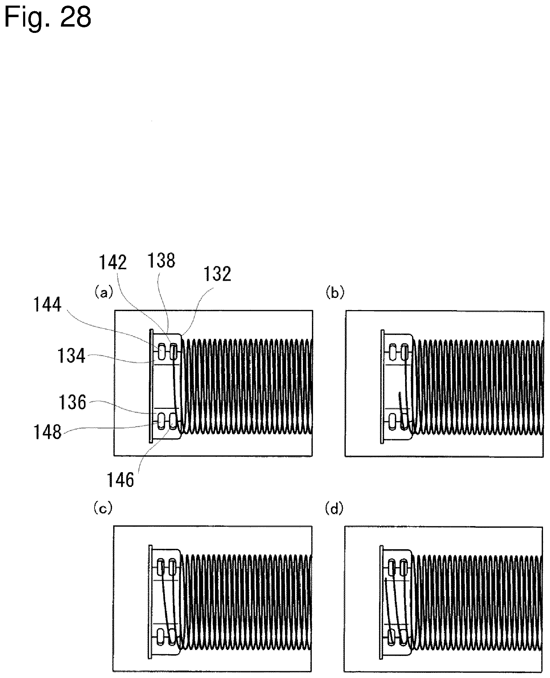

Fig. 28 is a diagram showing how the silencer 130 is mounted on the freely operating coil spring. In Fig. 28(a), 80% of the end part of the coil spring abuts against the coil spring abutting part 132. At this time, the end of the coil forming the coil spring turns the coil so as to reach the other side of the first vertical wall 134 through the hole 142 provided in the first vertical wall 134. Here, turning the coil means turning the coil with its central axis as the axis of rotation when it is regarded as a cylinder.

When the coil is turned one more turn, the tip of the coil moves along the inner wall of the cylindrical wall 138. The tip of the coil approaches the hole 146 from the other side of the second vertical wall 136. Here, if the coil is turned so that the tip of the coil passes through the hole 146, the tip of the coil reaches the position where it can be seen on this side. The state is depicted in Fig. 28 (b).

When the coil is turned a little further, the tip of the coil reaches the hole 144 provided in the first vertical wall 134. Then, the tip of the coil is passed through the hole 144, and the coil is further turned to reach the other side of the first vertical wall 134 to be moved along the inner wall of the cylindrical wall 138. Fig. 28 (c) depicts this state.

When the coil is turned one more turn, the tip of the coil reaches the position of the hole 148 provided in the second vertical wall 136. When the coil is turned a little more turn so that the tip of the coil passes through the hole 148, the tip of the coil reaches and hits the first vertical wall 134 (the position without the hole), and is fixed there.

In this way, the silencer 130 is mounted on the coil spring. Since two turns of the coil pass through the silencer 130 and pass through the four holes, the silencer 130 and the coil spring are combined with a strength that can withstand the vibration and swing of the coil spring.

That is, the coil spring and the silencer 130 are attached in a removable state.

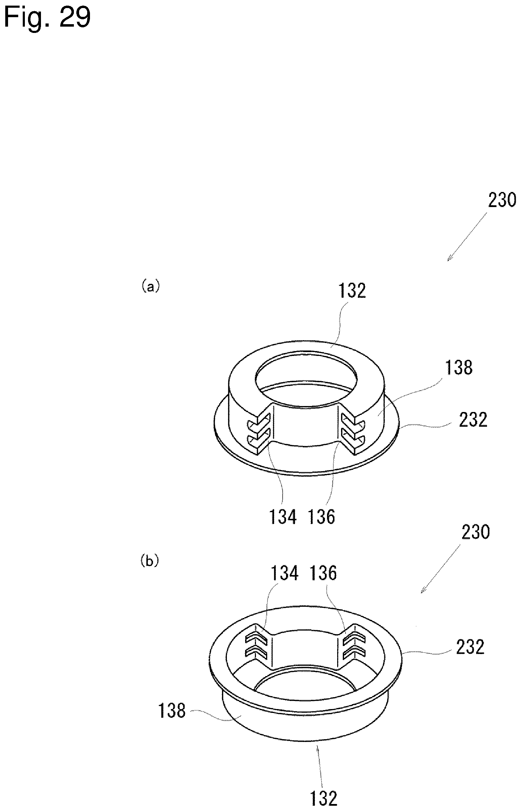

Fig. 29 is a perspective view showing a silencer with a widened flange (spring fixture) 230.

In the silencer 130 described above, the outer diameter of the part of the coil spring abutting part 132 and the outer diameter of the part corresponding to the back side thereof are about the same.

On the other hand, the silencer with a flange (spring fixture) 230 is provided with a flange 232 on the back side of the coil spring abutting part 132 to make it wider.

That is, the flange 232 is a disk (or an annular member) parallel to the coil spring abutting part 132 of the cylindrical wall on the side opposite to the coil spring abutting part 132 and extends outward. The outer diameter of the flange 232 is larger than the inner diameter of the opening of the upper container and is the same as the outer diameter of the opening of the upper container.

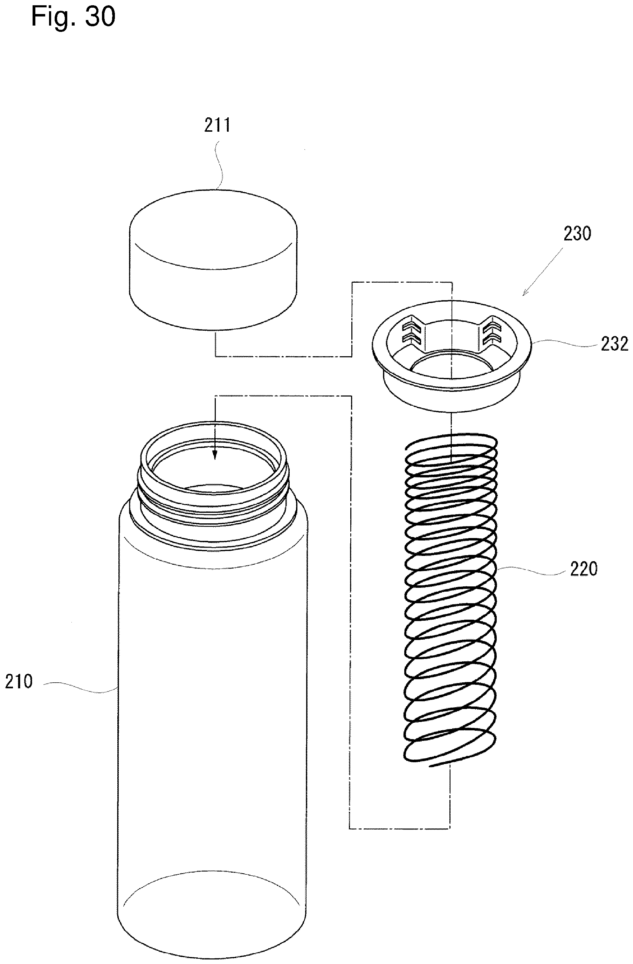

Fig. 30 is a diagram showing how the spring is fixed to the upper part of the device for mixing liquid material by using the spring fixture 230.

The flanged silencer (spring fixture) 230 is attached to the coil spring 220 in the same manner as in Fig. 28. Then, the coil spring 220 is inserted into the container 210. At this time, since the outer diameter of the flange 232 is larger than the inner diameter of the opening of the upper container, the flange 232 is caught by the opening and stops. When the upper opening-closing member 211 is attached in that state, the spring fixture 230 is fixed and the coil spring 220 is fixed.

The spring fixture 230 and the silencer 130 are both removable, and can be provided as removable by the user who purchased the device for mixing liquid material. Therefore, by attaching two silencers 130 and a spring fixture 230 to the set of the container, the upper opening-closing member, and the coil spring of the device for mixing liquid material, the user can use it in various variations.

For example, by attaching two silencers 130 to both ends of the coil spring, it is possible to use it with reduced noise. In addition, when sufficient stirring force can be obtained with the coil spring fixed to the upper part, it is possible to use it with the silencer 130 on one side of the coil spring removed and replaced with the spring fixture 230, and with the coil spring suspended on the upper part.

When the coil spring is fixed to the upper part, it is easy to take out the coil spring after use. When the coil spring is used as a freely movable one, it takes time to take out the coil spring, but it is expected that the stirring force will be large.

### << Why should facial washing foam, hand soap, body soap, shampoo, and kitchen detergent be whipped ?>>

Hand washing is an important skill in these days when there are many infectious diseases. The reason why it is better to wash hands by frothing with soap is that it is possible to remove dirt efficiently and with low irritation by frothing well. The way of using soaps and cleansers that are gentle on the skin is important. It is said that it is important to froth well, not to rub the skin too much, and to wash it off thoroughly. Surfactant molecules are involved in removing dirt, and have a hydrophilic group that is easily compatible with water and a lipophilic group that is easily compatible with oil. The mechanism of cleaning with a surfactant is to wrap sebum and dirt with the lipophilic group toward the dirt and the hydrophilic group toward the water, and penetrate between the skin and the dirt to remove the dirt. In addition, the surfactant has a frothing action, and it can be expected to have the effect of raising dirt by frothing and efficiently removing dirt without rubbing the skin too much. In other words, it can be expected that by frothing soap and cleaning agent well, firstly, the cleaning agent spreads to details such as wrinkles on the skin; secondly, by making dirt stand out, dirt can be removed efficiently with less friction; thirdly, it is possible to wash a large area with a small amount of cleaning agent due to the increase in volume due to frothing; fourthly, the concentration of the cleansing agent that comes into contact with the skin is low and the irritation of the skin is reduced; and fifthly, by using it with good froth, the residue of cleansing ingredients on the skin after rinsing is reduced.

For frothing soap and detergent, frothing is done by the three-way relationship of undiluted solution, dissolving water and air. A fluffy creamy froth is formed by mixing the undiluted solution and dissolving water in the air and whipping. When the undiluted solution and dissolving water are mixed and whipped by changing the amount of air in the device for mixing liquid material according to the present invention, the froth formed in the device for mixing liquid material (400 ml) becomes moist creamy froth. When the moist creamy froth comes out of the bottle into the atmosphere, it turns into a fluffy creamy froth. During this change, by improving the above five effects more efficiently, creating a feeling that has never been experienced before, and using unprecedented frothing to remove dirt more effectively, such effects are obtained as to 1. prevent an increase in the amount of detergent used; 2. prevent an increase in the amount of water used for rinsing; 3. shorten the rinsing time; 4. prevent dryness of the skin due to rough hands and deterioration of the stratum corneum barrier function due to moisturizing ingredients of the skin; and 5. be useful for cleaning all kinds of oil dirt on kitchen tableware to get unprecedented cleanliness by easily removing oil dirt.

### << Other Applications >>

Liquid material is not limited to facial cleansers, detergents, shampoos, and the like. For example, it can also be used as a building material dispersed (dissolved) in water. Liquid material can also be applied to hair styling products (such as hair styling liquids), cleansing oils, and the like.

Furthermore, it can be applied to industrial machine oils. By using the industrial machine oils in the machine uniformed by using this device for mixing liquid material, the machine can be operated efficiently. Here, the industry includes various industries such as the chemical industry, the construction industry, and the food processing industry. Then, the industrial machine includes both a self-propelled machine such as an industrial vehicle and a fixed machine. Specifically, it includes hydraulic pumps, boilers, prime movers, and the like. Machine oils include hydraulics in hydraulic pumps and lubricating oils in other machines.

In particular, in hydraulic pumps and hydraulic devices used at sites in the construction industry, it becomes necessary to replenish machine oil at the sites. In that case, the device for mixing liquid material according to the present invention is useful for homogenizing and filling the oil required for replenishment.

### << Application to cooking device for mixing liquid material, bottle for liquid material, bottle for seasonings >>

The device for mixing, whipping, and frothing materials according to the present invention is also applicable to a device for whipping food and beverage, and to a bottle for seasoning.

### Industrial Applicability

The present invention provides a whipper and a bottle for dressing-type seasonings which contains an aqueous phase and an oil phase and is used by dispersing the oil phase in the aqueous phase. It can also be used as a mixing device or a bottle used for dispersing powder such as flour in water. It can also be used as a whipper for whipping milk. It cannot only be used for food materials but also be used as a device or a bottle for agitating and frothing construction materials, detergents, hair dressing, facial cleansing liquid, facial cleanser, body soap, and the like, which are used by dispersing power or oil in water. It can also be applied for agitating and frothing machine oil.

### Reference Signs List

- 10: Container
- 11: Upper opening-closing member
- 12: Lower opening-closing member
- 20: Coil spring
- 31, 32, 33: Impact absorber
- 110: Container
- 110b, 110c: Grip part
- 111, 112: Upper opening-closing member
- 111a, 111b: Knob part
- 111c, 112c: Whip or froth take-out port
- 112a: Lid part
- 112b: Receiving part
- 120: Coil spring
- 130: Silencer
- 132: Coil spring abutting part
- 134: First vertical wall
- 136: Second vertical wall
- 138: Cylindrical wall
- 142, 144, 146, 148: Hole
- 210: Container
- 211: Upper opening-closing member
- 220: Coil spring
- 230: Flanged silencer (spring fixture)
- 232: Flange

## Claims

1. A device for mixing liquid material that contains a material to be dispersed and a liquid in a mixed state and is shaken to allow the material to be dispersed in the liquid such that the liquid material is whipped or frothed, the device **characterized by** comprising:
a container extending in the longitudinal direction for containing the liquid material and whip or froth of the liquid material;
an upper opening-closing member provided at an upper part of the container for taking in and out the liquid material; and
a coil spring contained in the container, the coil spring having a constant winding diameter, the coil spring having a dense pitch at an upper end and a lower end, respectively, and a sparse pitch in a central part, the coil spring moving freely inside the container.

2. The device for mixing liquid material according to any one of claims 1 to 5, **characterized in that** the container has a wide central part and includes a space for containing the whipped whip or the frothed froth.

3. The device for mixing liquid material according to claim 1 or 2, **characterized in that** a shock absorbing material is provided at the upper part and a lower part in the container.

4. The device for mixing liquid material according to any one of claims 1 to 3, **characterized in that** a lower opening-closing member is further provided at a lower part of the container.

5. A device for mixing liquid material that contains a material to be dispersed and a liquid in a mixed state and is shaken to allow the material to be dispersed in the liquid such that the liquid material is whipped or frothed, the device **characterized by** comprising:
a container that includes a space on an inner side extending in the longitudinal direction for containing the liquid material and whip or froth of the liquid material, and a grip shape that allows a hand to be gripped on an outer side of the container;
an opening-closing member provided at an upper part of the container for taking in and out the liquid material; and
a coil spring contained in the container, the coil spring having a length that is 60 percent to 80 percent of a height on the inner side of the container, the coil spring having a constant winding diameter, the coil spring having a sparse pitch at both ends and a dense pitch in a central part, the coil spring moving freely inside the container in the longitudinal direction, the coil spring being capable of vibrating and swing, wherein
a user is allowed to shake the container both in a state extending in the longitudinal direction and a state in a horizontal direction in the longitudinal direction and in the horizontal direction, respectively.

6. The device for mixing liquid material according to claim 5, **characterized in that** the coil spring has a winding diameter of 55% to 85% of an inner diameter of the container.

7. The device for mixing liquid material according to claim 7 or 8, **characterized in that** the coil spring includes 8 to 15 turns in the central part which have the pitch of zero, that is, which are in contact with an adjacent winding, and the pitch other than the central part, that is, the pitch at both ends, that is, a distance away from the adjacent winding is 55 percent to 65 percent of a wire diameter of the coil spring.

8. The device for mixing liquid material according to any one of claims 1 to 7, **characterized in that** a silencer is provided at one end or both ends of the coil spring.

9. The device for mixing liquid material according to claim 8, **characterized in that**
the silencer includes:
a coil spring abutting part that abuts against and supports 80% of a planar spread formed by one winding of an end of the coil spring relative to the one winding;
a first vertical wall and a second vertical wall which are two vertical walls which are perpendicular to the coil spring abutting part and also perpendicular to the coil constituting the coil spring, and are provided at limiting positions where the coil spring of the coil spring abutting part abuts; and
a cylindrical wall that extends vertically opposite to the coil spring of the coil spring abutting part, and has an inner diameter set to be the outer diameter of the coil spring, and
the first vertical wall and the second vertical wall each have two holes through which a coil constituting the coil spring can pass arranged side by side in a direction in which the coil spring extends.

10. The device for mixing liquid material according to claim 9, the device **characterized by** further comprising
a spring fixture,
the spring fixture including:
a coil spring abutting part that abuts against and supports 80% of a planar spread formed by one winding of an end of the coil spring relative to the one winding;
a first vertical wall and a second vertical wall which are two vertical walls which are perpendicular to the coil spring abutting part and also perpendicular to the coil constituting the coil spring, and are provided at limiting positions where the coil spring of the coil spring abutting part abuts;
a cylindrical wall that extends vertically opposite to the coil spring of the coil spring abutting part, and has an inner diameter set to be the outer diameter of the coil spring; and
a flange which is a disk parallel to the coil spring abutting part of the cylindrical wall on a side opposite to the coil spring abutting part and extends outward, wherein
the first vertical wall and the second vertical wall each have two holes through which a coil constituting the coil spring can pass arranged side by side in a direction in which the coil spring extends,
an outer diameter of the flange is identical to an outer diameter of an opening of the container, and
if necessary, a user is capable of replacing the silencer with the spring fixture to use the coil spring by being fixed to the opening of the container.

11. A method of using a device for mixing liquid material that mixes the liquid material by using the device according to any one of claims 5 to 10, the method comprising:
containing the liquid material and the coil spring in the container, the liquid material being in a state in which a material to be dispersed and liquid are mixed and closing the opening-closing member;
repeatedly shaking the device for mixing liquid material with the liquid material and the coil spring contained by the containing in the longitudinal direction in which the coil spring can vibrate by the user holding the device for mixing liquid material by a hand so that the space on the inner side extending in the longitudinal direction is in a vertical direction;
repeatedly shaking the device for mixing liquid material with the liquid material and the coil spring contained after the shaking in the longitudinal direction in a transverse direction in which the coil spring can vibrate by the user holding the device for mixing liquid material by a hand so that the space on the inner side extending in the longitudinal direction is in a horizontal direction; and
opening the opening-closing member to take out a content.

12. A method of using a device for mixing liquid material that mixes the liquid material by using the device according to any one of claims 5 to 10, the method comprising:
containing the liquid material and the coil spring in the container, the liquid material being mixed at a ratio of 15 ml of dissolving water with respect to 1.5 cm to 2.0 cm in length of facial washing foam squeezed out from a tube in which the facial washing foam is contained and closing the opening-closing member, a volume of the dissolving water being 30 ml or less;
repeatedly shaking the device for mixing liquid material with the liquid material and the coil spring contained by the containing 40 to 75 times in the longitudinal direction in which the coil spring can vibrate by the user holding the device for mixing liquid material by a hand so that the space on the inner side extending in the longitudinal direction is in a vertical direction;
repeatedly shaking the device for mixing liquid material with the liquid material and the coil spring contained 40 to 75 times after the shaking in the longitudinal direction in a transverse direction in which the coil spring can vibrate by the user holding the device for mixing liquid material by a hand so that the space on the inner side extending in the longitudinal direction is in a horizontal direction; and
opening the opening-closing member to take out a content.

13. A method of using a device for mixing liquid material that mixes the liquid material by using the device according to any one of claims 5 to 10, the method comprising:
containing the liquid material and the coil spring in the container, the liquid material being mixed at a ratio of 15 ml of dissolving water with respect to a gel-like hand soap pushed 2 to 5 times contained in a pump-type container and closing the opening-closing member, a volume of the dissolving water being 30 ml or less;
repeatedly shaking the device for mixing liquid material with the liquid material and the coil spring contained by the containing 20 to 40 times in the longitudinal direction in which the coil spring can vibrate by the user holding the device for mixing liquid material by a hand so that the space on the inner side extending in the longitudinal direction is in a vertical direction;
repeatedly shaking the device for mixing liquid material with the liquid material and the coil spring contained 20 to 40 times after the shaking in the longitudinal direction in a transverse direction in which the coil spring can vibrate by the user holding the device for mixing liquid material by a hand so that the space on the inner side extending in the longitudinal direction is in a horizontal direction; and
opening the opening-closing member to take out a content.

14. A method of using a device for mixing liquid material that mixes the liquid material by using the device according to any one of claims 5 to 10, the method comprising:
containing the liquid material and the coil spring in the container, the liquid material being mixed at a ratio of 20 ml of dissolving water with respect to a gel-like body soap pushed 2 to 3 times contained in a pump-type bottle and closing the opening-closing member, a volume of the dissolving water being 30 ml or less;
repeatedly shaking the device for mixing liquid material with the liquid material and the coil spring contained by the containing 50 to 100 times in the longitudinal direction in which the coil spring can vibrate by the user holding the device for mixing liquid material by a hand so that the space on the inner side extending in the longitudinal direction is in a vertical direction;
repeatedly shaking the device for mixing liquid material with the liquid material and the coil spring contained 50 to 100 times after the shaking in the longitudinal direction in a transverse direction in which the coil spring can vibrate by the user holding the device for mixing liquid material by a hand so that the space on the inner side extending in the longitudinal direction is in a horizontal direction; and
opening the opening-closing member to take out a content.

15. A method of using a device for mixing liquid material that mixes the liquid material by using the device according to any one of claims 5 to 10, the method comprising:
containing the liquid material and the coil spring in the container, the liquid material being mixed at a ratio of 20 ml of dissolving water with respect to a gel-like shampoo pushed 1 to 2 times contained in a pump-type bottle and closing the opening-closing member, a volume of the dissolving water being 30 ml or less;
repeatedly shaking the device for mixing liquid material with the liquid material and the coil spring contained by the containing 40 to 75 times in the longitudinal direction in which the coil spring can vibrate by the user holding the device for mixing liquid material by a hand so that the space on the inner side extending in the longitudinal direction is in a vertical direction;
repeatedly shaking the device for mixing liquid material with the liquid material and the coil spring contained 40 to 75 times after the shaking in the longitudinal direction in a transverse direction in which the coil spring can vibrate by the user holding the device for mixing liquid material by a hand so that the space on the inner side extending in the longitudinal direction is in a horizontal direction; and
opening the opening-closing member to take out a content.

16. A method of using a device for mixing liquid material that mixes the liquid material by using the device according to any one of claims 5 to 11, the method comprising:
containing the liquid material and the coil spring in the container, the liquid material being mixed at a ratio of 20 ml of dissolving water with respect to a kitchen detergent pushed 3 to 4 times contained in a pump-type bottle and closing the opening-closing member, a volume of the dissolving water being 20 ml or less;
repeatedly shaking the device for mixing liquid material with the liquid material and the coil spring contained by the containing 40 to 75 times in the longitudinal direction in which the coil spring can vibrate by the user holding the device for mixing liquid material by a hand so that the space on the inner side extending in the longitudinal direction is in a vertical direction;
repeatedly shaking the device for mixing liquid material with the liquid material and the coil spring contained 40 to 75 times after the shaking in the longitudinal direction in a transverse direction in which the coil spring can vibrate by the user holding the device for mixing liquid material by a hand so that the space on the inner side extending in the longitudinal direction is in a horizontal direction; and
opening the opening-closing member to take out a content.

17. A method of using a device for mixing liquid material that mixes the liquid material by using the device according to any one of claims 5 to 10, the method comprising:
making a solid face-washing soap into powder by using a household grater;
containing the liquid material and the coil spring in the container, the liquid material being obtained by mixing the powdered soap manufactured by the making with 30 ml of dissolving water and closing the opening-closing member;
repeatedly shaking the device for mixing liquid material with the liquid material and the coil spring contained by the containing 40 to 100 times in the longitudinal direction in which the coil spring can vibrate by the user holding the device for mixing liquid material by a hand so that the space on the inner side extending in the longitudinal direction is in a vertical direction;
repeatedly shaking the device for mixing liquid material with the liquid material and the coil spring contained 40 to 100 times after the shaking in the longitudinal direction in a transverse direction in which the coil spring can vibrate by the user holding the device for mixing liquid material by a hand so that the space on the inner side extending in the longitudinal direction is in a horizontal direction; and
opening the opening-closing member to take out a content.

18. The method of using the device for mixing liquid material according to any one of claims 11 to 17, the method **characterized by** further comprising:
after the opening,
rubbing the content taken out in the opening and picked up by the user to change a state of moist creamy froth to fluffy creamy froth.

19. A method of mixing for dissolving powder material in liquid using the device for mixing liquid material according to any one of claims 5 to 10, the method comprising:
containing the powder material, the liquid, and the coil spring in the container and closing the opening-closing member;
repeatedly shaking the device with the powder material, the liquid, and the coil spring contained by the containing in the longitudinal direction in which the coil spring can vibrate by the user holding the device for mixing liquid material by a hand so that the space on the inner side extending in the longitudinal direction is in a vertical direction;
repeatedly shaking the device with the powder material, the liquid, and the coil spring contained after the shaking in the longitudinal direction in a transverse direction in which the coil spring can vibrate by the user holding the device by a hand so that the space on the inner side extending in the longitudinal direction is in a horizontal direction; and
opening the opening-closing member to take out a content.
